# EUROPEAN PATENT APPLICATION

(11) **EP 3 385 865 A1**
(43) Date of publication of application: **10.10.2018**
(21) Application number: 16870266.0
(22) Date of filing: 16.09.2016
(51) Int. Cl.: G06F 17/30

(54) **INFORMATION PROCESSING DEVICE, INFORMATION PROCESSING METHOD, AND PROGRAM**

(30) Priority: 30.11.2015 JP 2015233861
(71) Applicant: Sony Corporation, Tokyo 108-0075 (JP)
(72) Inventor: KANO, Ritsuko, Tokyo 108-0075 (JP); HIROSE, Yukiyoshi, Tokyo 108-0075 (JP); MASUI, Shintaro, Tokyo 108-0075 (JP)
(74) Representative: MFG Patentanwälte Meyer-Wildhagen Meggle-Freund Gerhard PartG mbB
(86) International application number: PCT/JP2016/077512
(87) International publication number: WO 2017/094326

(57) **Abstract**

[Object] To provide a novel and improved information processing apparatus, an information processing method, and a program capable of displaying preference information that reflects user's emotion to music. [Solution] The information processing apparatus includes a preference information output unit that outputs preference information, which has been generated on a basis of emotion information of a user in response to moods included in a musical piece, of the user to that displays the preference information. Accordingly, it is possible to display preference information that reflects user's emotion to music.

## Description

### Technical Field

The present disclosure relates to an information processing apparatus, an information processing method, and a program.

### Background Art

In recent years, so-called music sharing services by which users share music information via the Internet have been proposed. Such music sharing services provide opportunities to meet new musical pieces to the respective users by introducing the musical pieces between the users.

In addition, an information processing apparatus that generates a user preference vector of a user on the basis of content meta-information corresponding to content that the user has used and introduces another user to the user based on the user preference vector has been proposed (Patent Literature 1, for example). This information processing apparatus displays the user to be introduced along with a reason for the introduction.

### Citation List

### Patent Literature

Patent Literature 1: JP 2009-157899A

### Disclosure of Invention

### Technical Problem

However, the reason for the introduction proposed in Patent Literature 1 is generated thoroughly on the basis of the content meta-information, and how the user has actually felt about the content that the user has used is not taken into consideration. Therefore, the information processing apparatus disclosed in Patent Literature 1 cannot sufficiently present preference of the user to be introduced as a reason for the introduction.

Thus, the present disclosure proposes a novel and improved information processing apparatus, an information processing method, and a program capable of displaying preference information that reflects user's emotion to music.

### Solution to Problem

According to the present disclosure, there is provided an information processing apparatus including: a preference information output unit that outputs preference information, which has been generated on a basis of emotion information of a user in response to moods included in a musical piece, of the user to a display unit that displays the preference information.

In addition, according to the present disclosure, there is provided an information processing method including: outputting preference information, which has been generated on a basis of emotion information of a user in response to moods included in a musical piece, of the user to a display unit that displays the preference information.

In addition, according to the present disclosure, there is provided a program that causes a computer to function as: a preference information output unit that outputs preference information, which has been generated on a basis of emotion information of a user in response to moods included in a musical piece, of the user to a display unit that displays the preference information.

### Advantageous Effects of Invention

According to the present disclosure, it is possible to display preference information that reflects user's emotion to music as described above.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an outline diagram of an information processing system according to an embodiment of the present disclosure.
[FIG. 2] FIG. 2 is an outline diagram for explaining an example of a service that is provided by the information processing system according to the embodiment of the present disclosure.
[FIG. 3] FIG. 3 is an outline diagram for explaining an example of a service that is provided by the information processing system according to the embodiment of the present disclosure.
[FIG. 4] FIG. 4 is an outline diagram for explaining an example of a service that is provided by the information processing system according to the embodiment of the present disclosure.
[FIG. 5] FIG. 5 is a block diagram illustrating an outline of a functional configuration of a server (first information processing apparatus) according to the embodiment.
[FIG. 6] FIG. 6 is a table related to emotion information that is used by a recommended user decision unit of the server illustrated in FIG. 5.
[FIG. 7] FIG. 7 is a table related to emotion information that is used by a recommended user decision unit of the server illustrated in FIG. 5.
[FIG. 8] FIG. 8 is a table related to emotion information that is used by a recommended user decision unit of the server illustrated in FIG. 5.
[FIG. 9] FIG. 9 is an example of data that is used by a preference information generation unit of the server illustrated in FIG. 5.
[FIG. 10] FIG. 10 is an example of data that is used by a preference information generation unit of the server illustrated in FIG. 5.
[FIG. 11] FIG. 11 is an example of data that is used by a preference information generation unit of the server illustrated in FIG. 5.
[FIG. 12] FIG. 12 is an example of data that is used by a preference information generation unit of the server illustrated in FIG. 5.
[FIG. 13] FIG. 13 is an example of data that is used by a preference information generation unit of the server illustrated in FIG. 5.
[FIG. 14] FIG. 14 is a block diagram illustrating an outline of a functional configuration of a user terminal (second information processing terminal) according to the embodiment of the present disclosure.
[FIG. 15] FIG. 15 is a screen transition diagram of a user interface of the user terminal according to the embodiment of the present disclosure.
[FIG. 16] FIG. 16 is an example of a user interface screen of the user terminal according to the embodiment of the present disclosure.
[FIG. 17] FIG. 17 is an example of a user interface screen of the user terminal according to the embodiment of the present disclosure.
[FIG. 18] FIG. 18 is an example of a user interface screen of the user terminal according to the embodiment of the present disclosure.
[FIG. 19] FIG. 19 is an example of a user interface screen of the user terminal according to the embodiment of the present disclosure.
[FIG. 20] FIG. 20 is an example of a user interface screen of the user terminal according to the embodiment of the present disclosure.
[FIG. 21] FIG. 21 is an example of a user interface screen of the user terminal according to the embodiment of the present disclosure.
[FIG. 22] FIG. 22 is an example of a user interface screen of the user terminal according to the embodiment of the present disclosure.
[FIG. 23] FIG. 23 is a sequence diagram illustrating an example of operations of the information processing system according to the embodiment of the present disclosure.
[FIG. 24] FIG. 24 is a sequence diagram illustrating an example of operations of the information processing system according to the embodiment of the present disclosure.
[FIG. 25] FIG. 25 is a sequence diagram illustrating an example of operations of the information processing system according to the embodiment of the present disclosure.
[FIG. 26] FIG. 26 is another example of information that is used by the recommended user decision unit of the server illustrated in FIG. 5.
[FIG. 27] FIG. 27 is another example of information that is used by the recommended user decision unit of the server illustrated in FIG. 5.
[FIG. 28] FIG. 28 is another example of information that is used by the recommended user decision unit of the server illustrated in FIG. 5.
[FIG. 29] FIG. 29 is another example of data that is used by the preference information generation unit of the server illustrated in FIG. 5.
[FIG. 30] FIG. 30 is another example of data that is used by the preference information generation unit of the server illustrated in FIG. 5.
[FIG. 31] FIG. 31 illustrates display of preference information according to a modification example of the present disclosure.
[FIG. 32] FIG. 32 illustrates display of preference information according to a modification example of the present disclosure.
[FIG. 33] FIG. 33 illustrates display of preference information according to a modification example of the present disclosure.
[FIG. 34] FIG. 34 illustrates display of preference information according to a modification example of the present disclosure.
[FIG. 35] FIG. 35 illustrates display of preference information according to a modification example of the present disclosure.
[FIG. 36] FIG. 36 is an outline diagram illustrating editing of music data by edited music data generation unit that is included in a user terminal according to a modification example of the present disclosure.
[FIG. 37] FIG. 37 is a block diagram illustrating a hardware configuration of the server illustrated in FIG. 1.
[FIG. 38] FIG. 38 is a block diagram illustrating a hardware configuration of the user terminal illustrated in FIG. 1.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted. Also, in the present specification and drawings, similar structural elements of different embodiments will be distinguished by adding a different letter of the alphabet after the same reference numeral. However, in cases where there is no particular need to distinguish among each of a plurality of structural elements having substantially the same functional configuration, only the same reference numeral will be used.

Note that description will be given in the following order.
1. Example of exterior of information processing system
2. Example of configuration of server (first information processing apparatus)
3. Example of configuration of user terminal (second information processing apparatus)
4. Example of user interface of user terminal
5. Example of operation of information processing system
6. Modification example
7. Example of hardware configuration of server
8. Example of hardware configuration of user terminal
9. Computer program

### <1. Example of exterior of information processing system>

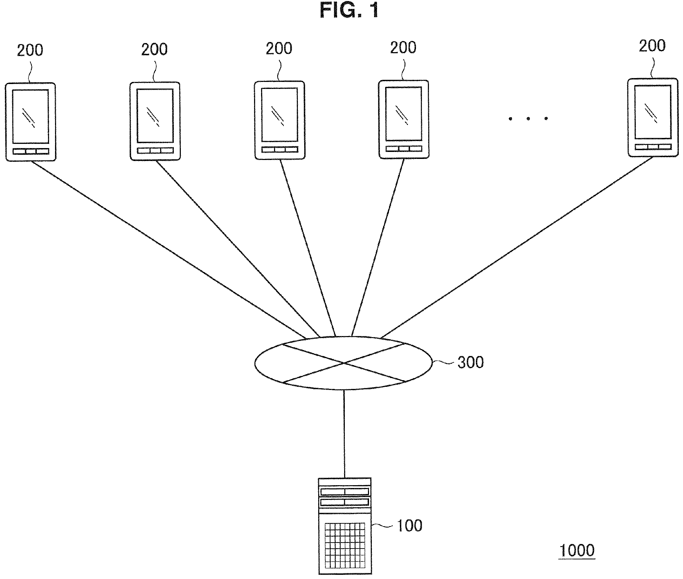

First, an outline configuration of an information processing system 1000 according to an embodiment of the present disclosure will be described with reference to FIGS. 1 to 4.

FIG. 1 is an outline diagram of the information processing system 1000 according to the embodiment of the present disclosure. The information processing system 1000 illustrated in FIG. 1 has a server 100 and a plurality of user terminals 200, which are connected to be able to communicate via a network 300.

The server 100 is an example of the first information processing terminal according to the present disclosure, collects information about an emotion of a user in response to music (hereinafter, also simply referred to as "emotion information") from a user terminal 200, and transmits the emotion information or information based on the emotion information to another user terminal 200.

Here, "emotion in response to music" described in the present disclosure refers to a change in feelings of a listener (user), which occurs during reproduction of music data, that is, a so-called enthusiasm feeling. Such a change in feelings can be detected on the basis of changes in biological information of the user during the reproduction of the music data, for example. Although the biological information is not particularly limited, examples thereof include a heart rate, a body temperature, sweating, blood pressure, sweating, a pulse, breathing, blinking, eye movement, gaze duration, a pupil diameter size, blood pressure, brain waves, body motion, body posture, a skin temperature, an electric skin resistance, and the like. The changes in such biological information can be detected by an input unit 226, which will be described later, and other sensors such as a heart rate meter, a blood pressure meter, a brain wave measurement machine, a pulse meter, a body temperature meter, an acceleration sensor, a gyro sensor, or a geomagnetic sensor, for example. In addition, the aforementioned information detected by the input unit 226 or the sensors can be utilized as emotion information.

In addition, the "music data" described in the present disclosure refers to data including music information. Therefore, the music data includes not only data including only sound information but also movie data including images such as stationary images and movies. In addition, the music data may further include other information, for example, information related to lighting of a light emitting element, generation of oscillation, operations of other applications, and the like. In addition, "a part of music data" described in the present disclosure is a concept including not only a part of the music data but also an entirety thereof.

The user terminals 200 are an example of the second information processing apparatus according to the present disclosure. The user terminals 200 are electronic equipment capable of reproducing music data, such as smartphones, mobile phones, tablets, media players, desktop computers, or laptop computers, for example. Each user terminal 200 collects emotion information of each user that uses the user terminal 200 and transmits the emotion information to the server 100. In addition, each user terminal 200 receives emotion information of another user or information based on the emotion information from the server 100 and provides a notification of the information to each user.

In addition, the user terminal 200 can communicate with another user terminal 200 via the server 100 or independently of the server 100. In this manner, the user who operates the user terminal 200 can perform conversation and information exchange with other users through chatting, a messenger, or the like, for example.

The network 300 is a wired or wireless transmission path of information that is transmitted from mechanisms that are connected to the network 300. For example, the network 300 may include public line networks such as the Internet, a telephone line network, or a satellite communication network, various local area networks (LANs) including Ethernet (registered trademark), wide area networks (WANs), and the like. In addition, the network 300 may include dedicated line networks such as an internet protocol-virtual private network (IP-VPN).

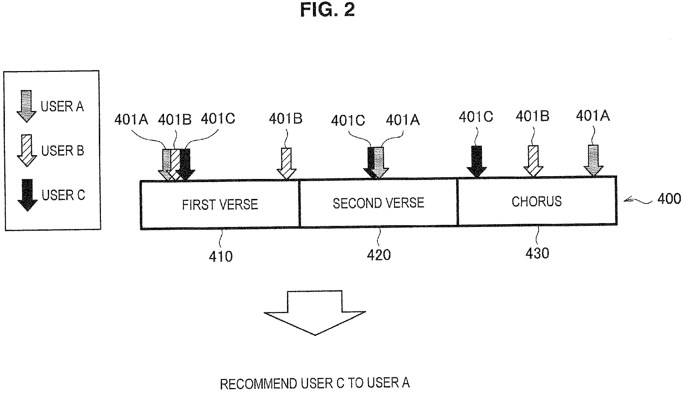

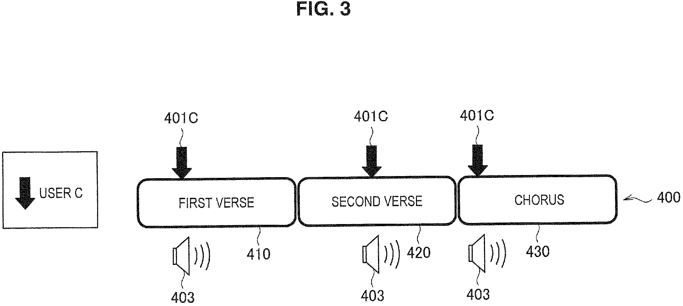

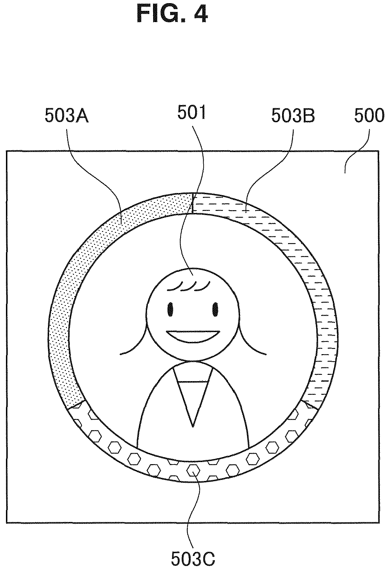

The aforementioned information processing system 1000 can provide services as illustrated in FIGS. 2 to 4, for example, to the user who owns the user terminal 200. FIGS. 2 to 4 are outline diagrams for explaining examples of services that are provided by the information processing system 1000 according to the embodiment of the present disclosure. The information processing system 1000 provides services such as "display of a recommended user" as illustrated in FIG. 2, "display of preference information" as illustrated in FIG. 3, and "reproduction of notification information" as illustrated in FIG. 4.

### (Display of recommended user)

FIG. 2 is an example of a service of recommending a user to another user by using emotion information. As illustrated in FIG. 2, the user terminal 200 associates and detects occurrence and occurrence positions of changes 401A, 401B, and 401C in feelings of users A, B, and C (hereinafter, also referred to as "emotion points") with each part of the music data in a case in which music data 400 is reproduced by each user terminal 200. Information related to the detected emotion points is transmitted as emotion information from each user terminal 200 to the server 100.

The server 100 decides which user is to be introduced (recommended) to the user A by comparing the emotion information. In FIG. 2, for example, a part 410 corresponding to a first verse, a part 420 corresponding to a second verse, and a part 430 corresponding to a chorus in the music data 400 are reproduced. In such a case, an emotion point 401A of the user A and the emotion point 401B of the user B overlap with each other at the beginning of the part 410. Meanwhile, the emotion point 401A of the user A and the emotion point 401C of the user C overlap with each other at the beginning of the part 410 and in the middle of the part 420. In this manner, emotion information of the user A (first user) in response to a part of first music data relates with emotion information of the user C (second user) in response to a part of second music data. Therefore, the server 100 decides that the user C who has the emotion point 401C including more overlapping parts with the emotion point A is to be introduced to the user A. Then, the information related to the user C is transmitted to the user terminal 200 of the user A by the server 100, and the information is displayed on the user terminal 200.

In this manner, a certain user can find a user with more similar emotion in response to music by utilizing the information processing system 1000. Then, intercommunication between the users with similar emotion in response to music becomes possible. That is, the present disclosure can provide a novel and improved information processing apparatus, information processing system, information processing method, and program capable of presenting a user with similar emotion in response to music to a certain user.

Note that the processing performed by the information processing apparatus, which has been proposed in Patent Literature 1, does not consider how the user actually felt about content that the user utilized. Therefore, the information processing apparatus in Patent Literature 1 does not necessarily introduce a user with similar emotion.

### (Reproduction of notification information)

FIG. 3 is an example of a service of providing notification information based on emotion information of another user to a user. First, the music data 400 is reproduced by the user terminal 200 that the user C owns, and the emotion point 401C corresponding thereto is detected. The information related to the detected emotion point is transmitted as emotion information from the user terminal 200 of the user C to the server 100.

The server 100 generates notification information 403 on the basis of the received emotion information and transmits the notification information 403 to the user terminal 200 of the user A. The user terminal 200 of the user A, which has received the notification information 403, presents the notification information 403 to the user A in synchronization with the reproduction of the musical piece during the reproduction of the music data 400. In the aspect illustrated in the drawing, the notification information 403 is sound information (sound effect).

In this manner, the user A can recognize a part at which the feeling of the user C has changed (that is, a part at which the user C "has become enthusiastic"), in the musical piece at the same time with the reproduction of the music data 400. Therefore, the user A can feel familiar with the emotion of the user C in response to the music in more detail and can share the feeling with the user C. As a result, even in a case in which the user is listening to the music alone, the user can feel as if the user were listening to the music together with other users as in a case in which the user has entered a live venue. That is, the present disclosure can provide a novel and improved information processing apparatus, information processing method, and program capable of providing a notification about a part at which the feeling of the user changes at the time of listening to music.

Note that the information processing apparatus described in Patent Literature 1 does not provide the user with any notification about at which part of music the feeling of another user actually changed.

### (Display of preference information)

FIG. 4 illustrates an example of a service of expressing a user along with preference information based on emotion information. In a user information image 500 illustrated in FIG. 4, a user image 501 of the user himself or herself is displayed, and mood images 503A, 503B, and 503C of the user are arranged around the user image 501. Such preference information 503A, 503B, and 503C is generated on the basis of emotion information obtained when the user reproduces the music data and is displayed with different colors in accordance with the respective moods of the preference information. The mood image 503A represents preference information indicating that the user is euphoric and is represented in red (the dotted pattern in the drawing), for example. The mood image 503B represents that the user is happy and is displayed in green (the hatching including broken lines in the drawing), for example. The preference information 503C represents that the user is joyful and is displayed in yellow (the pattern including a hexagon in the drawing), for example. Such a user information image 500 is displayed not only on the user terminal 200 of the user related to the mood images 503A, 503B, and 503C but also on the user terminal 200 of another user. Here, the moods described in this specification are atmospheres that appear when the musical piece related to the music data or a part thereof is reproduced, and include a melody, a motif, a sentiment, and a temper, for example. Such moods are classified into a plurality of types such as "euphoric," "happy," "joyful," "mild," "sad," "solemn," "bright," "healing," "fresh," and "elegant," which will be described later, for example. Such types of moods can be estimated on the basis of feature amounts of the musical piece. In addition, the moods of the musical piece can be analyzed by a mood analysis unit, which will be described later.

In this manner, the user who is in contact with the user information image 500 can clearly determine what kind of preference the user displayed on the user information image 500 has in response to the music. In addition, the preference information of the user displayed on the user information image 500 is on the basis of the fact that the feeling of the user has actually changed when the music data is reproduced. Therefore, such preference information more accurately represents actual preference of the user as compared with information related to preference based simply on a category and a reproduction history of the musical piece. That is, the present disclosure can provide a novel and improved information processing apparatus, information processing method, and program capable of displaying preference information that reflects the emotion of the user in response to the music.

Note that the reason for the introduction proposed in Patent Literature 1 is only on the basis of the content meta-data and does not consider how the user actually felt about the content that the user utilized. Therefore, the information processing apparatus in Patent Literature 1 cannot sufficiently represent the preference of the user to be introduced as a reason for introduction.

### <2. Example of configuration of server (first information processing apparatus)>

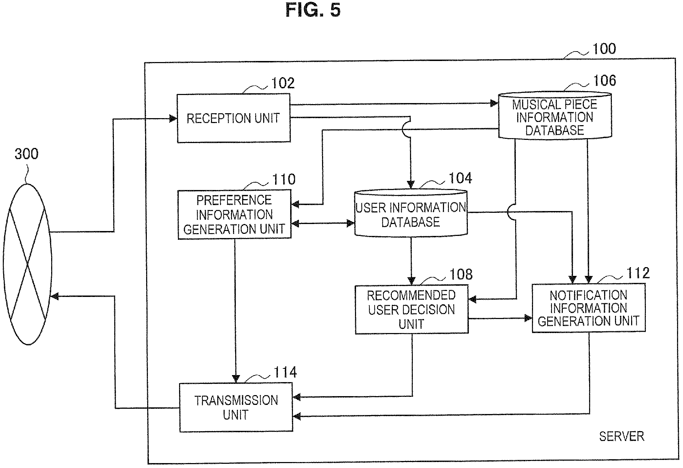

Next, a configuration of the server 100 according to the embodiment will be described with reference to FIGS. 5 to 13.

FIG. 5 is a block diagram illustrating an outline of a functional configuration of the server 100 according to the embodiment. As illustrated in FIG. 5, the server 100 has a reception unit 102, a user information database 104, a musical piece information database 106, a recommended user decision unit 108, a preference information generation unit 110, a notification information generation unit 112, and a transmission unit 114.

### (Reception unit)

The reception unit 102 is connected to the network 300 and can receive information from electronic equipment such as the user terminal 200 via the network 300. Specifically, the reception unit 102 receives information related to a user who owns the user terminal, such as emotion information, user information, a reproduction history, and owned musical piece information, meta-information of music data saved in the user terminal 200, mood information, and the like from the user terminal 200.

If the reception unit 102 receives the user information and the emotion information of the user who has the user terminal, then the reception unit 102 inputs the user information and the emotion information to the user information database 104. In addition, if the reception unit 102 receives the meta-information and the mood information of the music data, then the reception unit 102 inputs the meta-information and the mood information to the musical piece information database 106.

### (User information database)

The user information database 104 is included in the storage unit along with the musical piece information database 106. The user information database 104 stores information about the user who has the user terminal 200. As such information related to the user, user profile information such as a user ID, a user name, and a user image, information related to a favorite user of the user, a music data reproduction history, a musical piece ID of music data owned, emotion information, preference information, sound effect information, and the like are exemplified.

### (Musical piece information database)

The musical piece information database 106 records information related to the music data. As the information related to the music data, meta-information such as a musical piece ID of each piece of music data, a musical piece name, artist information, album information, a cover image, a category, and mood information is exemplified, for example.

### (Recommended user decision unit)

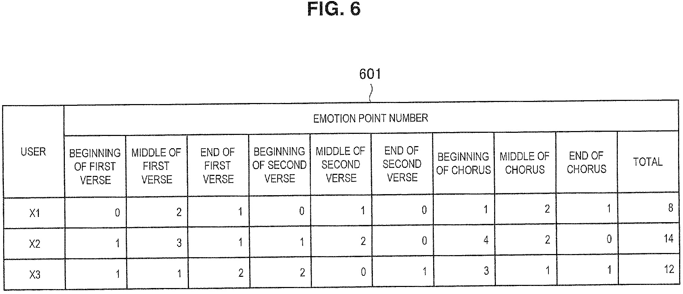

The recommended user decision unit 108 decides a user to be recommended (presented) to a certain user on the basis of correlation of emotion information between the users. In other words, the recommended user decision unit 108 functions as a user specification unit that compares information including the emotion information and specifies a first user associated with emotion information related to emotion information for a second user. In the embodiment, the recommended user decision unit 108 decides the user to be recommended by calculating a product of relative frequencies of emotion points between the users as described in FIGS. 6 to 8, for example. FIGS. 6 to 8 are tables related to emotion information that is used by the recommended user decision unit 108 of the server 100 illustrated in FIG. 5.

First, the recommended user decision unit 108 acquires the emotion point of each user in response to music data A1 from the user information database and obtains data as illustrated in the table 601. The table 601 represents the number of the emotion point (emotion point number) for each part of certain music data for users X1, X2, and X3.

Here, users who are candidates for the recommendation are users who own musical pieces A1 to An that are at least parts of the musical pieces that the user who receives the presentation of the recommended user owns, for example. In addition, the music data for the musical pieces A1 to An that is used for deciding the recommended user is music data for which emotion information has been generated by a method, which will be described later, for the user who receives the presentation of the recommended user. In addition, it is preferable that, for such music data, emotion information have been generated for all the users who are candidates for deciding the recommended user.

In the embodiment, the emotion points are generated on the basis of body motion of the users in response to each part of the music data. Further, the emotion point numbers are values obtained by integrating frequencies of body motion during the reproduction of the music data for each part of the music data.

In addition, the parts of the music data in the aspect illustrated in the drawing are sections obtained by further dividing phrases in the music data into a plurality of parts, more specifically, into three parts, namely the beginning, the middle, and the end. Note that the aforementioned parts are not limited to those in the aspect illustrated in the drawing, may be phrases themselves, strains or sections obtained by dividing the strains, or bars. However, the parts of the music data are preferably sections obtained by dividing each phrase of the music data into a plurality of parts in consideration of the fact that changes in feeling of the user occur in parts with certain unity in music data, for example, in a phrase.

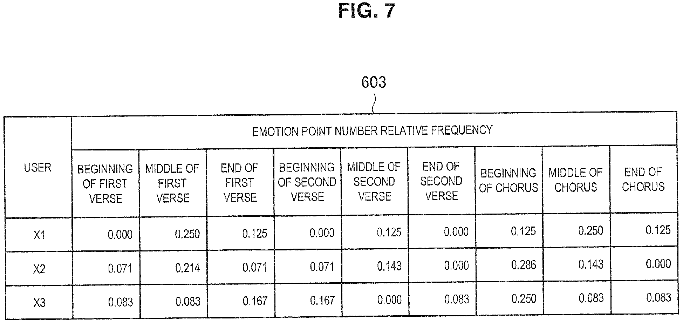

Then, the recommended user decision unit 108 calculates, for each user, a relative frequency of the emotion point number described in the table 601 in the music data as illustrated in FIG. 7 and obtains relative frequency information as illustrated in the table 603.

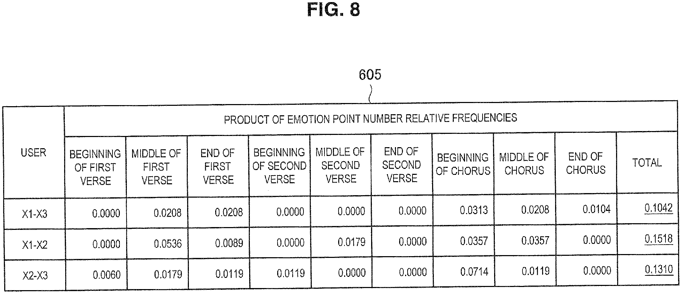

Then, the recommended user decision unit 108 multiplies relative frequencies of the emotion point numbers illustrated in FIG. 7 between the users for each part of the music data and obtains a product of the relative frequencies of the emotion point numbers between the users as illustrated in FIG. 8. Then, a total (sum) of products for each part is obtained as a degree of relevance of the emotions between the users for the musical piece A1. If a case in which either of the users X2 and X3 is recommended to the user X1 is considered, for example, the user X2 with a greater total of the products of the relative frequencies has higher correlation of emotions with the user X1 than the user X3. If a case in which either of the users X1 and X3 is recommended to the user X2 is considered, for example, the user X1 with a greater total of the products of the relative frequencies has higher correlation of emotions with the user X2 than the user X3.

The recommended user decision unit 108 performs the aforementioned calculation on the musical pieces A2 to An, integrates the aforementioned sums of the products for each part of the musical pieces A1 to An, and obtains emotion correlation degrees between the users. Then, the recommended user decision unit 108 selects a user with a relatively higher emotion correlation degree with the user who receives the presentation of the recommended user from among the users who are candidates and decides the user as the recommended user. Note that a plurality of recommended users may be decided.

The recommended user decision unit 108 transmits user information about the decided recommended user to the user terminal 200 of the user who receives the presentation of the recommended user via a transmission unit 230. Alternatively, the recommended user decision unit 108 may input the information about the decided recommended user to the user information database 104. In this case, the user information about the decided recommended user is transmitted to the user terminal 200 of the user who receives the presentation of the recommended user in response to a request from the user terminal 200 or periodically.

### (Preference information generation unit)

The preference information generation unit 110 generates information related to a preference of the user in response to music, that is, preference information. The preference information generation unit 110 generates the preference information on the basis of the emotion information of the user in response to moods included in musical pieces of music data. In the embodiment, the preference information is generated not only on the basis of the emotion information of the user but also on the basis of the moods of the musical pieces of the music data and the musical pieces that the user owns. In addition, the number of the musical pieces used for generating the emotion information may be one or more. Further, the number of the moods included in each of the musical pieces may be one or more. For example, the preference information can be obtained on the basis of emotion information of the user in response to a first mood included in a first musical piece and emotion information of the user in response to a second mood that is included in a second musical piece and is different from the second mood. Here, the first musical piece and the second musical piece may be the same musical piece or different musical pieces.

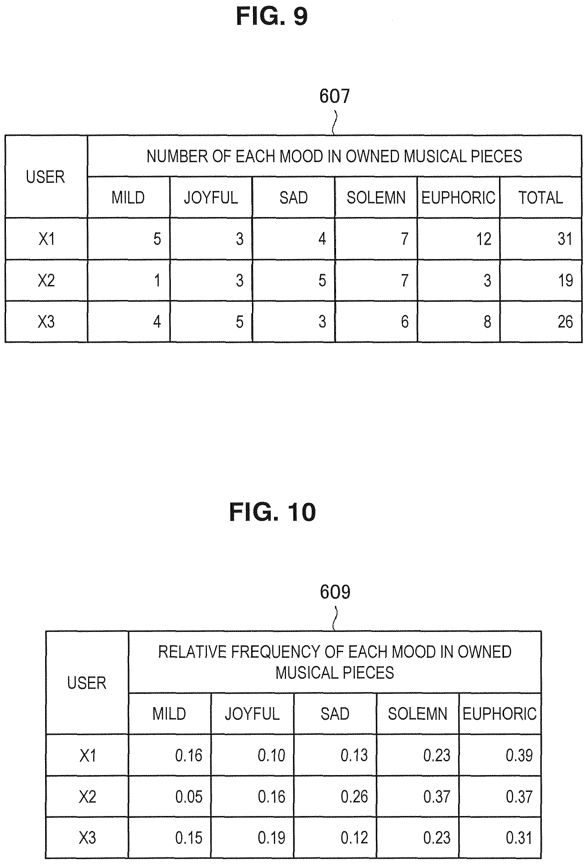

Hereinafter, a specific example of a process of generating the preference information by the preference information generation unit 110 will be described with reference to FIGS. 9 to 13. FIGS. 9 to 13 are examples of data that is used by the preference information generation unit 110 of the server 100 illustrated in FIG. 5. Note that the types of the moods and the number of the users are described in a limited manner in the aspect illustrated in the drawing for simplification of explanation. In the embodiment, the preference information is obtained by calculating relative frequencies of the emotion point numbers for each mood and relative frequencies of appearance of each mood and averaging the relative frequencies.

First, the preference information generation unit 110 reads, for each user, musical piece IDs of musical pieces that the user owns, that is, a list of the musical pieces that the user owns and emotion information of the user in response to each musical piece from the user information database 104. Meanwhile, the preference information generation unit 110 reads meta-information including mood information of the musical pieces corresponding to the musical piece IDs from the musical piece information database 106.

Then, the preference information generation unit 110 integrates, for each user, the number of the respective moods included in the musical pieces that the user owns as illustrated in the table 607 in FIG. 9 on the basis of the list of the musical pieces that the user owns and the mood information of the musical pieces. Here, the moods illustrated in FIG. 9 are moods included in the respective parts of the musical pieces that each user owns. Such parts of the musical pieces may be phrases, strains, sections obtained by dividing the phrases or strains, or bars.

Then, the preference information generation unit 110 calculates, for each user, the relative frequencies of appearances of the respective moods included in the musical pieces that the user owns as illustrated in the table 609 in FIG. 10.

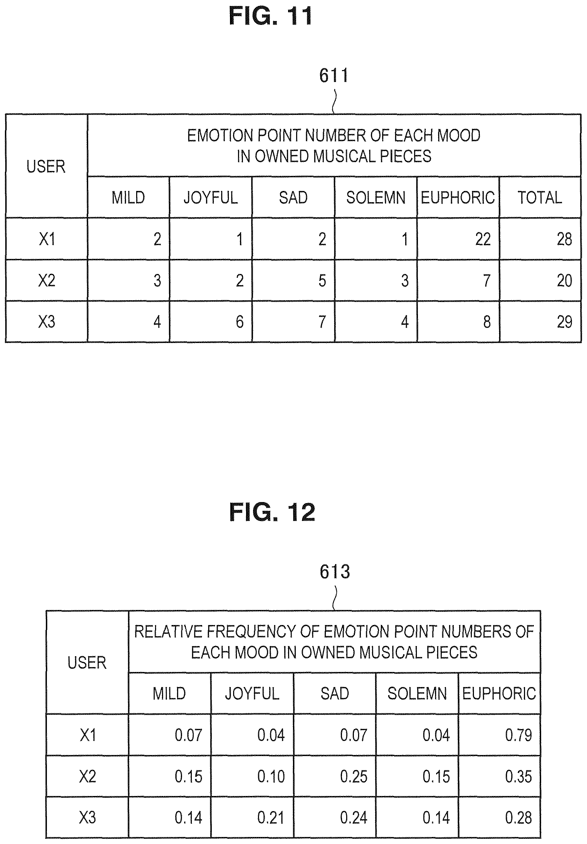

Then, the preference information generation unit 110 integrates, for each user, the emotion points for the respective moods of the musical pieces that the user owns as illustrated in the table 611 in FIG. 11 on the basis of the list of the musical pieces that the user owns and the emotion information for the respective musical pieces.

Then, the preference information generation unit 110 calculates, for each user, relative frequencies of the emotion point numbers for the respective moods of the musical pieces that the user owns as illustrated in the table 613 in FIG. 12.

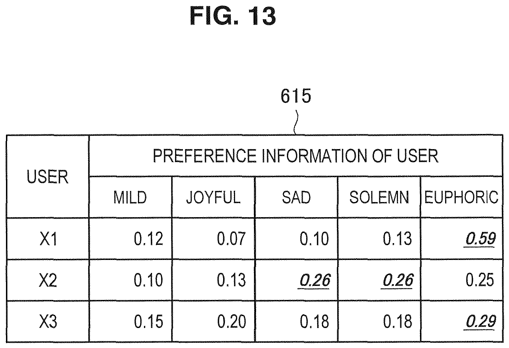

The relative frequencies of the emotion point numbers and the relative frequencies of the appearance of the moods obtained as described above are averaged for each user and for each mood, and the preference information for the user as illustrated in FIG. 13 is obtained. Since such preference information of the user is generated on the basis of the emotion information of the user, the preference information more appropriately reflects the fact that the feeling of the user has actually changed in response to the music as compared with a case in which the preference information is generated simply on the basis of the information of the musical pieces that the user owns or a reproduction history.

In FIG. 10, for example, the relative frequency for the mood of "euphoric" in the musical pieces that the user X1 owns is 0.39. However, in a case in which the emotion information is reflected as illustrated in FIG. 13, the relative frequency of "euphoric" in the preference information of the user X1 is 0.59. In addition, the relative frequencies of the moods of "solemn" and "sad" in the musical pieces that the user X2 owns are 0.37 and 0.26, respectively, in FIG. 10. However, in a case in which the emotion information is reflected as illustrated in FIG. 13, the relative frequencies of both "solemn" and "sad" in the preference information of the user X2 become 0.26, which is the same. In addition, the relative frequencies for the moods of "euphoric," "solemn," and "joyful" in the musical pieces that the user X3 owns are 0.31, 0.23, and 0.19, respectively, in FIG. 10. However, in a case in which the emotion information is reflected as illustrated in FIG. 13, relative frequencies of "euphoric," "solemn," and "joyful" in the preference information of the user X3 are 0.29, 0.18, and 0.20, respectively. Therefore, "solemn" and "joyful" are reversed in the preference of the user X3.

The preference information generation unit 110 causes the user information database 104 to store the thus generated preference information therein. Alternatively, the preference information generation unit 110 transmits the preference information to the user terminal 200 via the transmission unit 114.

### (Notification information generation unit)

The notification information generation unit 112 generates notification information. Here, the notification information is information indicating a method of providing a notification of the emotion information of its own or another user in synchronization with reproduction of a musical piece when music data is reproduced by the user terminal 200. The notification information is generated on the basis of the emotion information of the user in response to certain music data. In addition, the music data (second music data) that is reproduced at the same time of the notification of the notification information may be the same as or different from the music data (first music data) that is used for generating the emotion information. However, the second music data and the first music data are related to each other. For example, both the first music data and the second music data may be data related to the same musical piece. As such a case, a case in which the musical pieces included in the first music data and the second music data are the same but are saved in other storage mechanisms or a case in which file formats are different, for example, one is an mp3 file while the other is an mp4 file, is exemplified. In addition, the first music data may be data related to a first musical piece, and the second music data may be data related to a second musical piece including a part related to (similar to) a part of the first musical piece, for example. As the related part, a part that has the same or similar melody, rhythm, or a mood is exemplified.

A target user can be, for example, a user designated by the user terminal 200 who receives the notification information, a recommended user that has been decided by the recommended user decision unit 108, a specific limited user, for example, a favorite user, a user who belongs to a favorite group, or an arbitrarily decided user. In addition, the notification information may be generated on the basis of the emotion information of a single user or may be generated on the basis of emotion information of a plurality of users. Such matters can be changed in response to an instruction from the user terminal 200 that receives the notification information, for example.

In addition, a notification means in the user terminal 200 can be, for example, a sound of a sound effect or the like, oscillation such as vibration, light emission by an LED lamp or the like, and display of an image, characters, or the like. The notification means is appropriately selected by the user terminal 200.

Therefore, the notification information can include sound information related to the sound of the sound effect or the like, oscillation information related to oscillation, light emission information related to light emission, and image display information related to image display. Hereinafter, functions of the notification information generation unit 112 will be described for generation of the notification information, particularly, sound information and image display information.

The notification information generation unit 112 acquires user information including emotion information of the target user in response to target music data, a user image, and preference information from the user information database 104. In addition, the notification information generation unit 112 acquires meta-data of the target music data from the musical piece information database 106.

The notification information generation unit 112 generates sound information on the basis of the user information including the emotion information and the meta-data. Specifically, the notification information generation unit 112 creates the sound information such that sound (sound effect) is output to a part of the music data, which corresponds to the emotion information of the user, that is, a part from which the emotion point has been detected when the music data is reproduced. Note that parts of the music data can be in units of phrases, bars, or sections obtained by dividing the phrases or bars. In addition, a time during which the sound effect occurs is preferably before or after the unit section so as not to prevent appreciation of the music.

In addition, the notification information generation unit 112 selects the sound effect that is to be used for the sound information from among a plurality of types of sound effects prepared in advance, for example. The sound effects are not particularly limited, and can be, for example, electronic sound, sound that can occur in the world of nature, or pseudo sound thereof, or edited sound. As the sound that can occur in the world of nature, voice such as a call of "Bravo!" or cheers, sound caused by human body motion such as clapping, footsteps, instrument sound, sound derived from biological information such as heat beat, whistle, cracker sound, recorded sound from the audience side in a live venue, a concert hall, or the like are exemplified, for example.

In addition, the notification information generation unit 112 may select the sound effect based on the user information or the meta-information of the music data. The notification information generation unit 112 may change characteristics of voice or sentences of call on the basis of the sex and the age of the target user included in the user information, for example. In addition, the notification information generation unit 112 may set the sound effect on the basis of sound effect information in a case in which the sound effect information is included in the user information. Here, the sound effect information includes sound effect designation information for designating which of sound effects is to be selected and unique sound effect data related to a sound effect unique to the user. In a case in which the sound effect unique to the user is used for the sound effect, in particular, individuality of the target user is reflected in the sound effect. In addition, the notification information generation unit 112 may select the sound effect on the basis of mood information that the target music data has.

In addition, if there are a plurality of target users, the notification information generation unit 112 may change the sound volume of the sound effect and the type of the sound effect in accordance with the number of the users.

The notification information generation unit 112 may set the sound effect in accordance with an output mechanism such as a speaker or an earphone that is included in the user terminal 200. In addition, the notification information generation unit 112 may set a virtual position at which the sound effect occurs, by using a sound image positioning technique. In addition, the notification information generation unit 112 may set the sound effect in accordance with an environment around the user terminal 200.

In addition, the notification information generation unit 112 generates the image display information for displaying an image on the basis of the user information including the emotion information and the meta-information of the music data. The image display information includes information related to a notification image to be displayed and information related to a method of displaying the notification image.

The notification image is not particularly limited and can be an image including a geometric figure such as a polygon, a star-shaped polygon, an ellipse, a circle, and or a fan shape and the user information as well as an arbitrary image such as a figure that indicates a change in an emotion, or an animation. In a case in which the notification image is an image including the user information among these examples, it is possible for the user who owns the user terminal 200 to ascertain the user whose feeling has been moved when the music data is reproduced. Such an image including the user information is convenient in a case in which there are a plurality of target users, in particular, since it is possible to identify the target users. The image including the user information includes a user image included in the user information and the preference information of the user, for example. In addition, in a case in which the notification image is an animation, the animation can include a diagram indicating the amount in accordance with the emotioninformation of the user, for which the emotion information has been detected, for example, the amount in accordance with a change in the biological information of the user. It is possible for the user who owns the terminal 200 to recognize a degree of a change in the feeling (enthusiasm) of the user, for which the emotion information has been detected, in response to the musical piece by the diagram changing in accordance with the emotion information as described above.

The method of displaying the notification image can be an arbitrary method of indicating at which position in the music data the feeling of the target user has been moved. As such a method, a method of displaying the notification image for a specific time around timing at which the emotion point of the music data has been detected and a method of displaying the notification image at a part, from which the emotion point has been detected, in a time axis of a progress bar image of the music data displayed on the display unit are exemplified, for example.

Note that the notification information generation unit 112 can generate the notification information in accordance with the aforementioned method for the light emission information and the oscillation information.

The notification information generation unit 112 transmits the generated notification to the user terminal 200 via the transmission unit 114. The notification information may be transmitted periodically or may be transmitted every time the notification information is generated. In addition, the transmission method may be changed in accordance with setting performed by the user terminal 200. In addition, the user terminal 200 as a transmission destination can be at least one of the user (first user) who is involved in acquisition of the emotion information and another user (second user). That is, the notification of the notification information can be provided to at least one of the first user and the second user.

### (Transmission unit)

The transmission unit 114 is connected to the network 300 and can transmit information to electronic equipment such as the user terminal 200 via the network 300. Specifically, the transmission unit 114 can transmit, to the user terminal 200, the preference information generated by the preference information generation unit 110, the user information of the recommended user specified by the recommended user decision unit 108, and the notification information generated by the notification information generation unit 112. In addition, the transmission unit 114 can transmit various kinds of information stored in the user information database 104 and the musical piece information database 106 to the user terminal 200 in response to a request from the user terminal 200.

### <3. Example of configuration of user terminal (second information processing apparatus)>

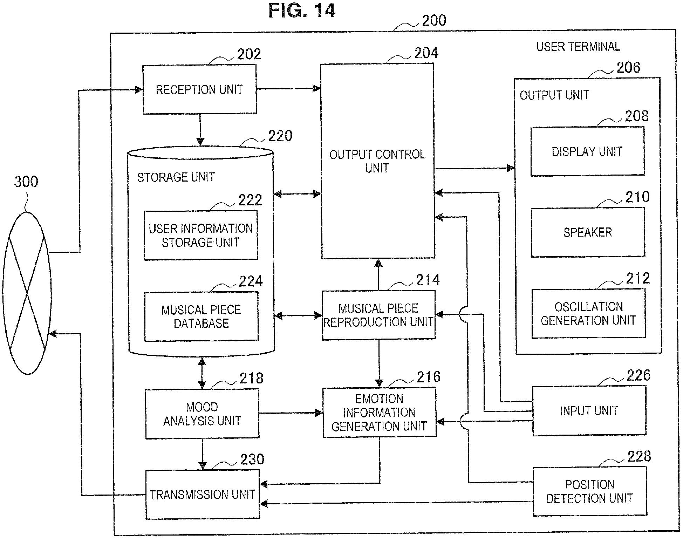

Next, a configuration of the user terminal 200 according to the embodiment will be described with reference to FIG. 14.

FIG. 14 is a block diagram illustrating an outline of a functional configuration of the user terminal 200 according to the embodiment. As illustrated in FIG. 14, the user terminal 200 includes a reception unit 202, an output control unit 204, an output unit 206, a musical piece reproduction unit 214, an emotion information generation unit 216, a mood analysis unit 218, a storage unit 220, an input unit 226, a position information detection unit 228, and a transmission unit 230.

### (Reception unit)

The reception unit 202 is connected to the network 300 and can receive information from electronic equipment such as the server 100 and other user terminals 200 via the network 300. Specifically, the reception unit 202 receives user information such as preference information of the recommended user or another user (first user) and the notification information from the server 100. Therefore, the reception unit 202 functions as an information acquisition unit. In addition, the reception unit 202 can receive a message from another user of another user terminal 200. The reception unit 202 inputs the received information to the respective components in the user terminal 200, for example, the storage unit 220 and the output control unit 204.

### (Output control unit)

The output control unit 204 controls outputs of information from the output unit 206, which will be described later. Specifically, the output control unit 204 outputs (inputs) information to the output unit 206 and provides an instruction for outputting the information. The output control unit 204 functions as a display control unit that controls display of an image on a display unit 208 of the output unit 206, a sound output control unit that controls sound outputs from a speaker 210, and an oscillation generation control unit that controls the oscillation generation unit. In addition, the output control unit 204 is an example of a presented information output unit that outputs the user information to the display unit 208 that presents the user information of the recommended user (first user) such that the user who owns the user terminal 200 (second user) can recognize the user information. Note that the output control unit 204 that serves as the presented information output unit can not only output the user information to the output unit 206 but also can control the output unit 206. Further, the output control unit 204 is an example of a preference information output unit that outputs the preference information to the display unit 208 that displays the preference information. Note that the output control unit 204 that serves as the preference information output unit can also not only output the preference information to the output unit 206 but also can control the output unit 206.

More specifically, the output control unit 204 generates and updates a user interface screen and causes the display unit 208 to display the user interface screen. The user interface screen is generated and updated by being triggered by, for example, a user's input through the input unit 226, a request from each part in the user terminal 200, reception of information from the server 100 or another user terminal 200, or the like. Note that a configuration of the user interface screen will be described later.

In addition, the output control unit 204 controls the speaker 210 and an external sound output device so as to output a sound effect in accordance with the user interface or sound of music data decoded by the musical piece reproduction unit 214 from the speaker 210 or the external sound output device such as an externally connected earphone or an external speaker (both of which are not illustrated in the drawing) in accordance with the content of the trigger input.

In addition, the output control unit 204 controls an oscillation generation unit 212 so as to cause oscillation or controls an LED lamp (not illustrated) so as to emit light in accordance with the content of the trigger input.

Further, the output control unit 204 performs control such that the output unit 206 outputs the notification information acquired from the server 100 via the reception unit 202. Therefore, the output control unit 204 is an example of a notification information output unit that outputs the notification information to the output unit (notification unit) 206 such that the notification information is provided to the user in association with parts of the music data when the music data is reproduced.

The output control unit 204 that serves as the notification information output unit can not only output the notification information to the output unit 206 but also can control the output unit 206. More specifically, the output control unit 204 that serves as the notification information output unit decides and changes a method of providing the notification information, outputs information of an instruction related to the decision and the change along with the notification information to the output unit 206, and controls the output unit 206. Here, the output control unit 204 can change the notification method by the output unit (notification unit) 206 in accordance with at least either information related to the user who has received the notification information and information related at least one of music data (first music data) that is involved in the acquisition of the emotion information and music data (second music data) reproduced along with the notification information. Here, the change of the notification method includes a change in the notification means such as sound, light, oscillation, or display as well as a change in a degree of an output (for example, the sound volume, the light amount, the oscillation amount, and the amount of information in the display) in the notification using the same notification means, a change in information in the notification (for example, a change in the sound effect, a change in a light blinking method, a change in an oscillation method, a change in an image or characters to be displayed). In a case in which the notification by the output unit (notification unit) 206 is performed by a sound output at a part of the second music data corresponding to the emotion information of the user in tune with the reproduction of the music data, for example, the change in the notification method can be a change in sound (sound information) to be output or a change in the sound volume to be output. In addition, the output control unit 204 can decide the notification method by the output unit in accordance with the type of the musical piece of the music data to be reproduced in a case in which the output control unit 204 functions as a notification control unit. For example, the notification method can be decided in accordance with a category or a mood of the musical piece of the reproduced data.

In addition, the output control unit 204 may determine the notification method by the output unit 206 in accordance with the number of notification information items acquired for the music data. If the number of the notification information items acquired exceeds a specific number, for example, the output control unit 204 may control the display unit 206 so as to restrict the notification information to be displayed on the display unit 206. In this case, the display unit 206 may be controlled such that only an icon that provides a notification of presence of a plurality of notification information items is displayed along a progress bar 713 in an ordinary reproduction screen (a player 710, which will be described later) while details of the notification information are displayed if a part of the progress bar 713 is enlarged, for example.

In addition, the output control unit 204 may change the sound volume of the sound effect or the type of the sound effect in accordance with the number of target users of the notification. For example, the output control unit 204 can change the notification method such that the number of target users of the notification can be imagined. For example, a quiet sound effect of "whispering" can be employed in a case in which the number is within 10, a sound effect of "murmuring" with a sound volume in a middle level can be employed in a case in which the number is from 11 to 100, and a sound effect of "hurly-burly" with a large sound volume can be employed in a case in which the number is equal to or greater than 101. In this manner, the user who has received the notification can recognize how much other users are interested in the musical piece that the user is to appreciate.

In addition, the output control unit 204 can decide the notification method by the output unit 206 in accordance with an environment around the user terminal 200 when the music data is reproduced. For example, the type of the sound effect can be changed in a case in which the surrounding environment is relatively quiet and in a case in which the surrounding environment is relatively noisy.

In addition, the output control unit 204 can change the notification method in response to an instruction from the user who owns the user terminal 200. For example, setting can be performed so as not to provide the notification information in response to the instruction from the user. In addition, the user can select the type of the notification information that is not to be provided as a notification (the sound effect, the notification image, or the like) in this case. In addition, the user can also appropriately select the target user of the notification.

In addition, the output control unit 204 can change the notification method in response to an instruction from the target user of the notification. For example, the output control unit 204 can control the output unit 206 so as to output the sound effect and the notification image designated by the target user of the notification.

### (Output unit)

The output unit 206 outputs information in response to an instruction for control from the output control unit 204. The output unit 206 has the display unit 208, the speaker 210, and the oscillation generation unit 212. Note that the output unit 206 is an example of a presentation unit that presents a recommended user such that the user who owns the user terminal 200 can recognize the recommended user. Further, the output unit 206 also functions as a notification unit that provides the aforementioned notification information.

### (Display unit)

The display unit 208 includes a display and displays images such as stationary images and/or movies in response to an instruction for control from the output control unit 204.

### (Speaker)

The speaker 210 is a mechanism for generating sound waves. The speaker 210 generates sound in response to an instruction for control from the output control unit 204.

### (Oscillation generation unit)

The oscillation generation unit 212 includes a mechanism capable of generating oscillation by a motor or the like. The oscillation generation unit 212 generates oscillation and oscillates the user terminal 200 in response to an instruction for control from the output control unit 204.

### (Musical piece reproduction unit)

The musical piece reproduction unit 214 includes a decoder, acquires music data from a musical piece database 224 included in the storage unit 220, and decodes the music data. Then, the musical piece reproduction unit 214 outputs the decoded music data as information including sound via the output control unit 204 and the output unit 206.

The musical piece reproduction unit 214 further inputs progress information about a progress status of the musical piece when the music data is reproduced to the emotion information generation unit 216.

### (Motion information generation unit)

The emotion information generation unit 216 detects motion (motion point) of feeling of the user in response to music data and generates emotion information. Specifically, if the progress information of the musical piece is input from the musical piece reproduction unit 214, the emotion information generation unit 216 detects the emotion point input from the input unit 226, and associates the emotion point with a time axis of the music data. Then, the emotion information generation unit 216 collects emotion points associated with the time axis throughout the music data and generates the emotion information.

Note that the emotion information generation unit 216 uses parts of the music data as the time axis of the music data in the embodiment. The parts of the music data can be sectioned as described above. Information about such parts of the music data is generated by the mood analysis unit 218 analyzing the music data such that the emotion information generation unit 216 can acquire the information.

In the embodiment, the emotion information is generated on the basis of body motion of the user in response to each part of the music data. The emotion information includes body motion information that is calculated on the basis of a frequencies of body motion of the user in response to each part of the music data. More specifically, the body motion information is calculated by integrating, for each part, frequencies of the body motion of the user in response to each part of the music data. The body motion tends to appear as a change in the feeling when the user is appreciating music and is an index that can be relatively objectively measured. Therefore, accuracy of the emotion information is improved by utilizing such body motion information related to body motion as a part of the emotion information.

### (Mood analysis unit)

The mood analysis unit 218 analyzes music data and obtains mood information related to the music data. Specifically, the mood analysis unit 218 first acquires music data saved in the musical piece database 224 of the storage unit 220. Then, the mood analysis unit 218 obtains time-music interval data by analyzing waveforms of a musical piece obtained from the music data with respect to two axes, that is, a time and energy for each music interval. Here, music intervals are analyzed into 12 music intervals (do-re-mi) in one octave. For example, the mood analysis unit 218 divides the musical piece data into parts corresponding to music of one second along the time axis and extracts energy for each frequency band corresponding to each of the twelve musical scales in one octave.

Then, the mood analysis unit 218 analyzes feature amounts, such as beat structures, code progression, keys, and structures of the musical piece from the information obtained by the analysis in accordance with music theories. The mood analysis unit 218 estimates moods for the respective parts of the musical piece included in the music data on the basis of the obtained feature amounts. Such moods can be classified into a plurality of types such as "euphoric", "happy", "joyful", "mild", "sad", "solemn", "bright", "healing", "fresh", and "elegant", for example. Then, the mood analysis unit 218 decides values in accordance with the feature amounts of the aforementioned parts of the music data for each of the classified moods. Then, the mood analysis unit 218 can estimate a mood with the highest value in accordance with the aforementioned feature amounts from among the plurality of classified moods as a mood of a target part. Note that a plurality of moods can be assigned to each part. In this case, the plurality of moods are decided in a descending order from the larger values in accordance with the feature amounts, for example, in accordance with the values in accordance with the aforementioned feature amounts. In addition, such estimation may be performed on the basis of a pattern table representing relationships between the feature amounts and the moods prepared in advance, for example. The aforementioned analysis can be performed by employing a twelve-sound analysis technique, for example. Then, the mood analysis unit 218 generates mood information that indicates correspondence between the moods and the respective parts of the music data. Note that the present disclosure is not limited to the aforementioned aspects, and the mood analysis unit 218 may generate the mood information on the basis of sound recognition information such as a compact disc database (CDDB) and music IDs included in the meta-information of the music data. Such music recognition information may also be acquired from an external database.

The mood analysis unit 218 provides not only the mood information but also various analysis data items for the music data as described above. In addition, the mood analysis unit 218 can section the music data into appropriate parts on the basis of the aforementioned various analysis data items.

The mood analysis unit 218 inputs analysis information including the obtained mood information to the musical piece database 224 and transmit the analysis information to the server 100 via the transmission unit 230.

### (Storage unit)

The storage unit 220 stores various kinds of information necessary for controlling the user terminal 200. In addition, the storage unit 220 has a user information storage unit 222 and a musical piece database 224.

The user information storage unit 222 stores information related to the user who owns the user terminal 200. As such information related to the user, information saved in the aforementioned user information database 104 and a communication history with another user or a group are exemplified.

The musical piece database 224 stores the music data of the musical pieces that the user owns, information related to the music data, for example, meta-information such as musical piece IDs of the respective music data items, musical piece names, artist information, album information, cover images, categories, and mood information, for example.

### (Input unit)

The input unit 226 is a device that can input information from the user or other equipment. In the embodiment, the input unit 226 includes a touch panel. Information related to various instructions from the user and a change in feeling of the user in response to music, for example, is input to the input unit 226. As described above, the change in the feeling of the user in response to the music is detected as body motion when the music data is reproduced in the embodiment. Specifically, the body motion is detected by a user's input such as user's tapping of a predetermined site on the touch panel in the embodiment. Note that the present disclosure is not limited to the aspect illustrated in the drawing, and the change in the biological information including body motion as a change in the feeling of the user in response to music can be automatically detected by a biological information detection unit such as a heart rate meter, a blood pressure meter, a brain wave measurement machine, a pulse meter, a body temperature meter, an acceleration sensor, a gyro sensor, and a geomagnetic sensor.

### (Position information detection unit)

The position information detection unit 228 is a mechanism that can detect position information of the user terminal, for example, a global positioning system (GPS). The position information detection unit 228 acquires the detected position information of the user terminal 200, inputs the position information to the storage unit 200, and if necessary, transmits the position information to the server 100 or another user terminal 200 via the transmission unit 230.

### (Transmission unit)

The transmission unit 230 is connected to the network 300 and can transmit information to electronic equipment such as the server 100 or another user terminal 200 via the network 300. Specifically, the transmission unit 230 transmits, to the server 100, information related to the user who owns the user terminal 200 such as emotion information, user information, a reproduction history, and owned musical piece information, meta-information and mood information of music data saved in the user terminal 200, and the like. In addition, the transmission unit 230 transmits a message to another user input through the input unit 226 to another user terminal 200.

### <4. User interface example of user terminal>

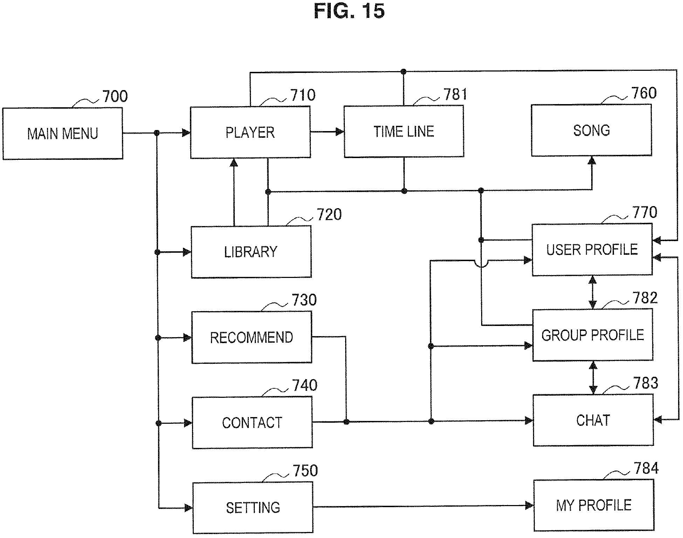

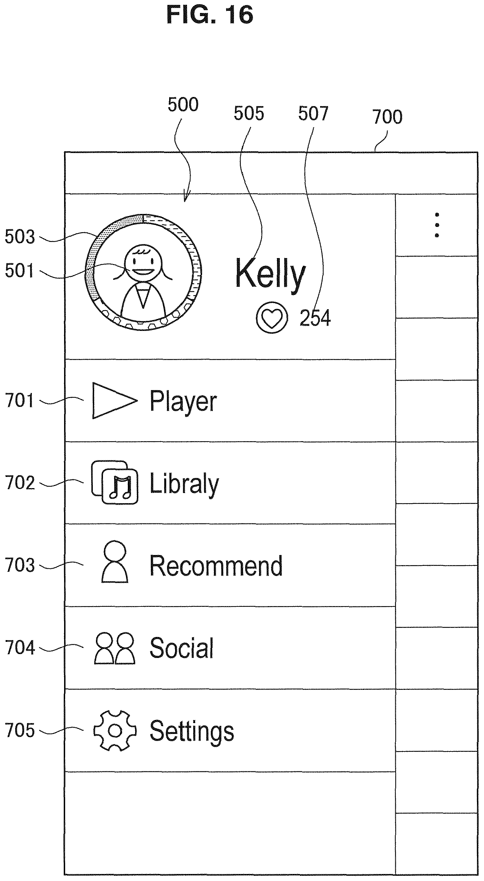

The example of the configuration of the user terminal 200 according to the embodiment has been described above. Next, a user interface example of the user terminal 200 according to the embodiment will be described with reference to FIGS. 15 to 22. FIG. 15 is a screen transition diagram of a user interface of the user terminal 200 according to the embodiment of the present disclosure, and FIGS. 16 to 22 are examples of user interface screens of the user terminal 200 according to the embodiment of the present disclosure.

As illustrated in FIG. 15, the user interface screen of the user terminal 200 according to the embodiment has a main menu 700 that serves as a first layer, a player 710, a library 720, a recommend 730, a contact 740, and a setting 750 that serve as a second layer, and a song 760, a user profile 770, a time line 781, a group profile 782, a chat 783, and a my profile 784 that serve as a third layer. Note that the user interface screen is generated by the output control unit 204 and is displayed on the display unit 208.

The main menu 700 illustrated in FIG. 16 is a screen that is displayed when the user terminal 200 is activated. The user information image 500 of the user who owns the user terminal 200 is displayed on the upper side in the main menu 700.

The user image 501 with a circular outer shape is displayed in the user information image 500, and an image (mood image) 503 related to the mood based on the preference information of the user is displayed so as to surround the periphery thereof. The display form of the user image 501 and the preference information 503 is similar to that illustrated in FIG. 4. As illustrated in FIG. 4, a plurality of, and in the embodiment, three different mood images 503A, 503B, and 503C are displayed with different colors around the user image 501. In addition, the mood images 503A, 503B, and 503C are images that form rings, and in the embodiment, circular rings arranged along the edge of the user image 501. In addition, the mood images 503A, 503B, and 503C respectively include a plurality of different colors, and these colors respectively represent different moods. Such mood images 503A to 503C represent three preference information items of the user with the largest numerical values in the aforementioned calculation, for example. In this manner, the user who owns the user terminal 200 can objectively recognize the preference of its own.

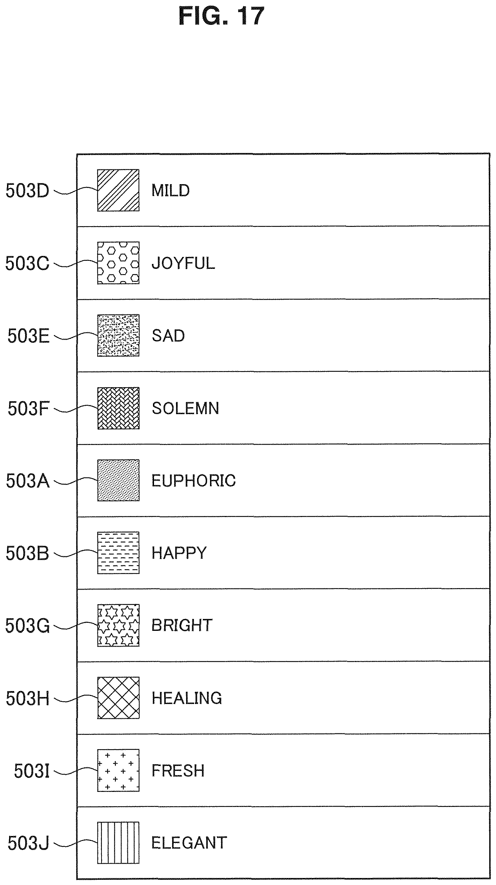

Note that the mood image is not limited to the aspect illustrated in the drawing and is selected from those illustrated in FIG. 17, for example. FIG. 17 is a diagram illustrating an example of the mood images of the user according to the embodiment. Mood images 503A to 503J illustrated in FIG. 17 are represented with respectively different colors (distinguished with hatching in the drawing) and represent different preferences. Specifically, the mood image 503A represents "euphoric", the mood image 503B represents "happy", the mood image 503C represents "joyful", the mood image 503D represents "mild", the mood image 503E represents "sad", the mood image 503F represents "solemn", the mood image 503G represents "bright", the mood image 503H represents "healing", the mood image 5031 represents "fresh", and the mood image 503J represents "elegant".

In addition, a user name 505 and favorite information 507 are displayed on the right side of the user image 501 in the user information image 500.

In addition, a player button 701, a library button 702, a recommend button 703, a contact button 704, and a setting button 705 are arranged below the user information image 500 of the main menu 700. If the user taps the touch panel on these images, the user interface screen transitions to the respective screens such as the player 710, the library 720, the recommend 730, the contact 740, and the setting 750, respectively.

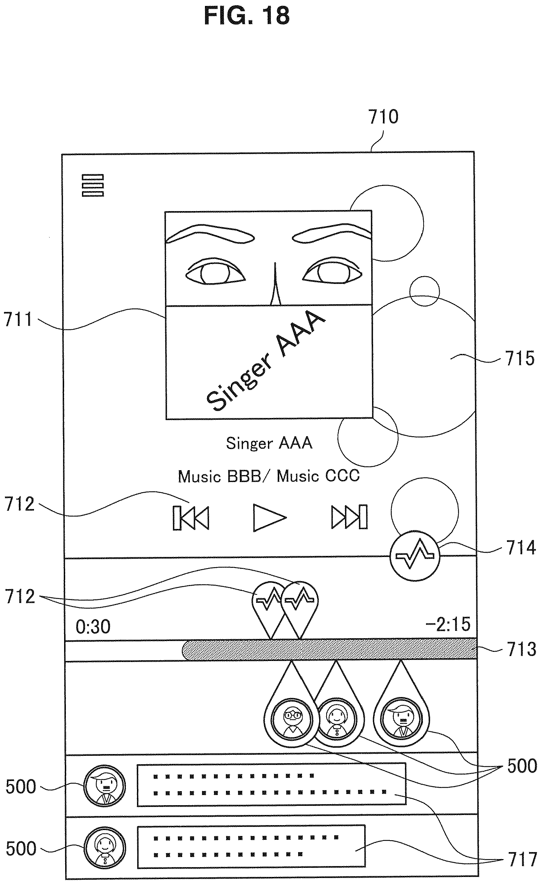

The player 710 illustrated in FIG. 18 is a screen that is displayed when the music data is reproduced. At the upper center of the player 710, a musical piece information image 711 of music data is displayed, and an operation button 812 is arranged below the musical piece information image 711. It is possible to perform operations related to reproduction of the music data by pressing the operation button 712. In addition, the user interface screen transitions to the song 760 that is a screen for displaying information related to the musical piece if the musical piece information image 711 is pressed.

In addition, the progress bar 713 that represents progress of the musical piece is arranged below the operation button 712, and an emotion point 716 of its own and user information image 500 as emotion information of other users are represented along the progress bar 713. The images and the arrangement positions of the emotion point 716 and the user information image 500 are generated on the basis of the notification information.

Therefore, the user can visually recognize a part at which feeling of other users has moved (has become enthusiastic) and can recognize the part at which the user themselves and other users share the feeling as compared with the emotion point 716 of the user itself with the user information image 500 as emotion information of other users. In addition, since preference information is described in the user information image 500, the user can examine compatibility of sensibilities of its own in response to music with other users by comparing the preference information with the preference of its own.

In addition, an emotion input button 714 is arranged on the right side of the operation button 712. If the user presses the emotion input button 714 in tune with the reproduction of the music data, body motion information for forming the emotion information is input to the input unit 226.

In addition, a moving bubble animation 715 is displayed around the musical piece information image 711. The animation 715 is generated on the basis of the notification information and is displayed on the basis of the emotion information of its own. For example, more bubbles are displayed for a part or a musical piece with larger sum of the emotion points of its own in the animation 715. It is possible for the user to recognize the emotion of the user in response to the musical piece of its own again and to uplift the mood by such an animation 715.

In addition, a comment 717 and the user information image 500 are displayed together below the progress bar 713 and the user information image 500 along the progress bar 713. Comments about the musical piece that other users have provided are displayed in the comment 717.

Note that if each user information image 500 described in the player 710 is pressed, the user interface screen transitions to the user profile 770 of the user corresponding to the user information image 500. Note that if each user information image 500 described in the player 710 is pressed, the user interface screen transitions to the time line 781 that displays the musical piece appreciated by the user corresponding to the user information image 500 in a time series manner, in accordance with the setting.

Next, the music data that the user owns is displayed in the library 720. If the user appropriately selects the music data, the user interface screen transitions to the player 710 such that the music data can be reproduced. Alternatively, the user interface screen transitions to the song 760 such that the information of the musical piece of the music data can be viewed.

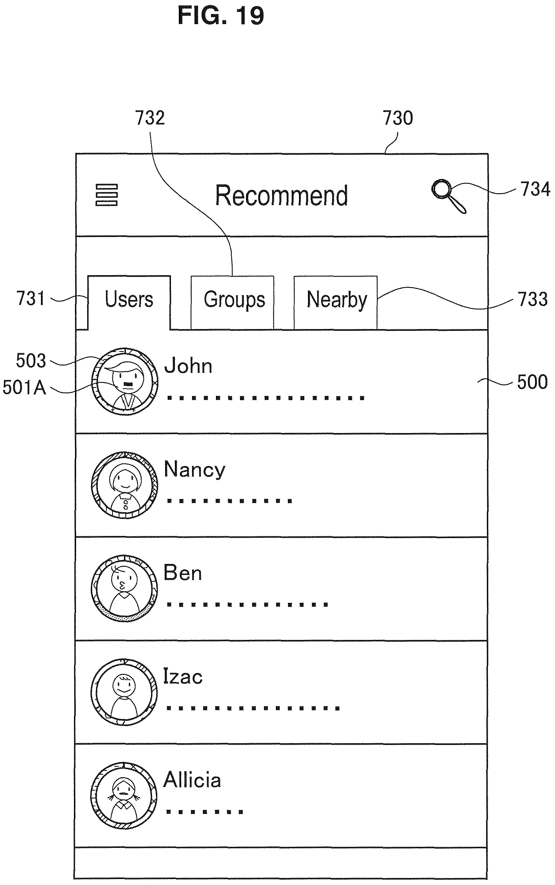

Next, the recommend 730 illustrated in FIG. 19 is a screen that displays a recommended user decided by the recommended user decision unit 108. The recommend 730 has a user tab 731, a group tab 732, a nearby tab 733, and a search button 734.

If the user presses the user tab 731, the user information image 500 of the recommended user decided by the recommended user decision unit 108 is listed in accordance with the degree of the recommendation. In addition, a user image 501A and preference information 503 are displayed in each user information image 500. In this manner, the user who owns the user terminal 200 can sufficiently determine not only the degree of the recommendation of the recommended user but also preference in response to music. In addition, if the user information screen that appears by such a user tab 731 being pressed is pressed, the user interface screen transitions to the user profile 770 that displays the corresponding recommended user.

In addition, if the user presses the group tab 732, groups recommended to the user are listed. Such groups are selected from groups to which the recommended user decided by the recommended user decision unit 108 belongs and groups in which users post, in chatting therein, musical pieces or artists whose properties are similar to those in the preference information of the user. In addition, if an image of a group that appears by such a group tab 732 being pressed is pressed, the user interface screen transitions to the group profile 782 that display the corresponding group.

In addition, if the user presses the nearby tab 733, users who are present near the user from among favorite users of the user or users in a group that the user joins are listed. In addition, if an image of a user who appears by the nearby tab 733 being pressed is pressed, the user interface screen transitions to the chat 783 in which chatting with the corresponding user becomes possible. In this manner, the user can know other users who are present near a live venue and can communicate with other users or can directly meet other users in a case in which the user is joining a live performance, for example.

In addition, the search button 734 arranged above the user tab 731, the group tab 732, and the nearby tab 733 is displayed in the recommend 730. If the user presses the search button 734, the user interface screen transitions to a screen for searching for other users or groups.

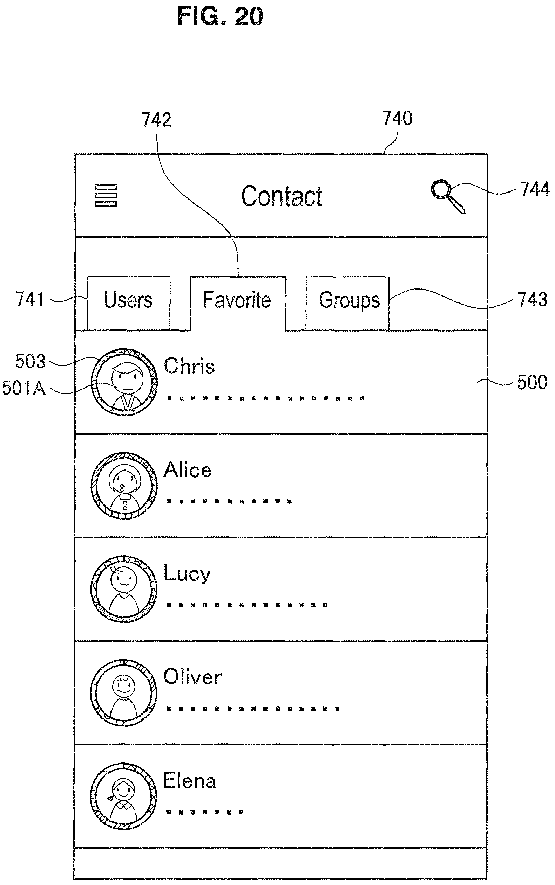

The contact 740 illustrated in FIG. 20 is a screen for the user who owns the user terminal 200 to contact with other users. The contact 740 has a user tab 741, a favorite tab 742, a group tab 743, and a search button 744.

If the user presses the user tab 741, other users who have previously contacted with the user are listed in a time series manner of the history of the contact or in accordance with frequencies. In addition, if an image of another user that appears by such a user tab 741 being pressed is pressed, the user interface screen transitions to a chat 783 in which chatting with the corresponding user becomes possible.

If the user presses the favorite tab 742, user information images 500 of favorite users that have been registered in the user's favorite are listed. In addition, the user image 501A and the preference information 503 are displayed in each of the user information image 500. In addition, if the user information image 500 that appears by such a favorite tab 742 being pressed is pressed, the user interface screen transitions to the chat 783 in which chatting with the corresponding user becomes possible.

If the user presses the group tab 743, groups that the user joins are listed. In addition, if an image of a group that appears by such a group tab 743 being pressed is pressed, the user interface screen transitions to the group profile 782 of the corresponding group.

In addition, the search button 744 arranged above the user tab 741, the favorite tab 742, and the group tab 743 is displayed in the contact 740. If the user presses the search button 744, the user interface screen transitions to a screen for searching for other users or groups.

The setting 750 is a screen for performing various kinds of setting for the user terminal 200 and the server 100. In the setting 750, a user's profile and notification information unique to the user, for example, are set by user's inputs. In addition, whether or not emotion information as a source of notification information, which is to be obtained by the user terminal 200, is to be derived from a single user, a plurality of users, a favorite users, or all the users, for example, is selected by a user's input in the setting 750.

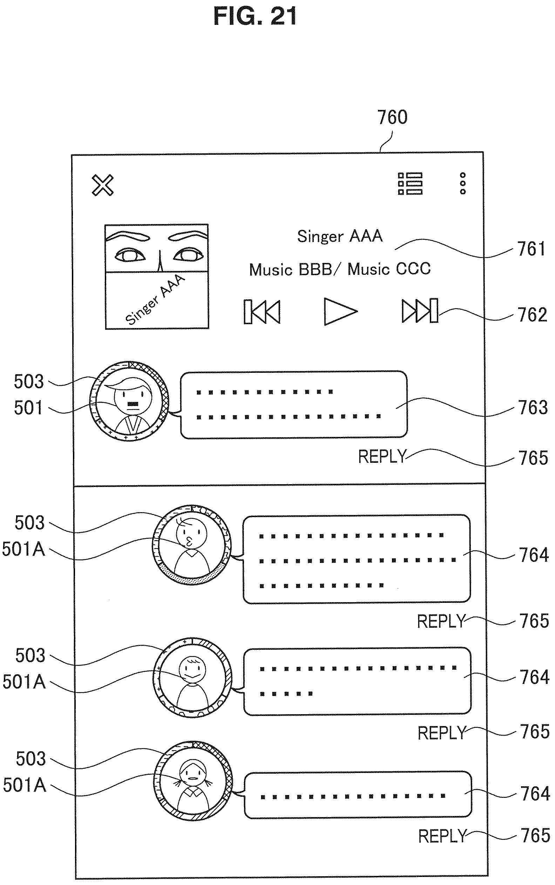

The song 760 illustrated in FIG. 21 is a screen for displaying comments of the respective users about the information related to the music data and the musical piece related to the music data. The musical piece information screen 761 of the music data is displayed at an upper portion of the song 760, and an operation button 762 is arranged beside the musical piece information image 761. Operations related to reproduction of the music data become possible by pressing the operation button 762.

In addition, the user image 501 of the user who owns the user terminal 200 and the preference information surrounding the periphery thereof are displayed along with the comment 763 below the musical piece information image 761 in the song 760. The comment 763 is a comment that the user who owns the user terminal 200 has posted about the musical piece. In addition, a reply button 765 is arranged below the comment 763. If the user presses the reply button 765, it becomes possible to input a response comment to the comment 763.

In addition, a comment 764 to the musical piece is displayed along with the user image 501A of another user who has posted the comment 764 and a mood image 503 arranged in the periphery thereof below the user image 501 and the comment 763. In addition, the reply button 765 is arranged below the comment 764. If the user presses the reply button 765, it becomes possible to input a response comment to the adjacent comment 764.

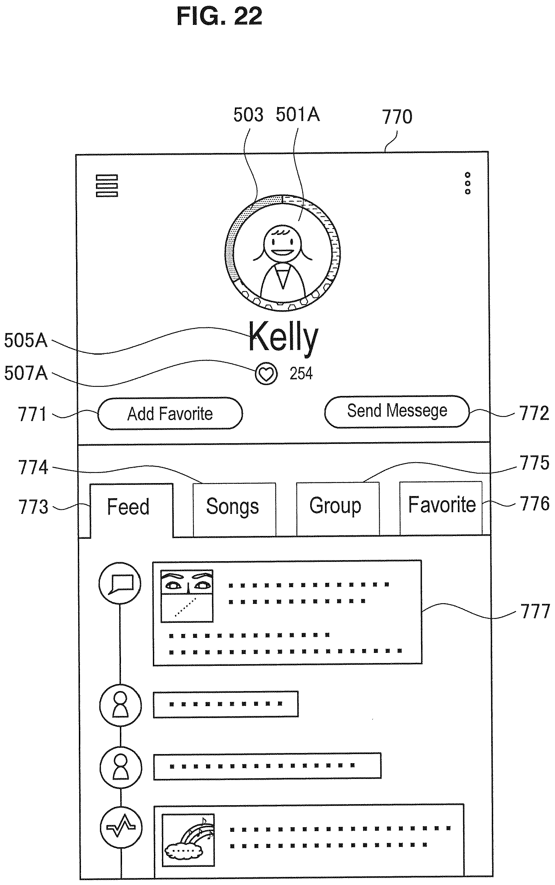

The user profile 770 illustrated in FIG. 22 is a screen that displays information related to users other than the user who owns the user terminal 200. At the upper center of the user profile 770, a user image 501A of the target user and a mood image 503 arranged in the periphery thereof are displayed. In addition, a user name 505A and favorite information 507A are displayed below the user image 501A. The number of favorite users that the target user has added is described in the favorite information 507A.

In addition, a favorite addition button 771 and a message transmission button 772 are displayed below the user name 505A and the favorite information 507A. If the favorite addition button 771 is pressed, the target user is added to the favorite users of the user who owns the user terminal 200. If the message transmission button 772 is pressed, the user interface screen transitions to the chat 783. In this manner, it becomes possible to transmit a message to the target user.

In addition, a feed tab 773, a song tab 774, a group tab 775, and a favorite tab 776 are aligned and arranged in a transverse direction below the favorite addition button 771 and the message transmission button 772.

If the feed tab 773 is pressed, an action history 777 of the user as a display target, for example, a music appreciation history, a favorite user addition history, a group joining history, and the like are displayed. If the song tab 774 is pressed, music data that the target user owns is listed. If the group tab 775 is pressed, groups that the target user joins are listed. If the favorite tab 776 is pressed, favorite users of the target user are listed.

In addition, if an image of a user displayed in a case in which the feed tab 773 or the favorite tab 776 is pressed is pressed, a user profile 770 of the corresponding user is displayed. In addition, if an image of a group displayed in a case in which the feed tab 773 or the group tab 775 is pressed is pressed, a group profile 782 of the corresponding group is displayed. Further, if an image of music data displayed in a case in which the feed tab 773 or the song tab 774 is pressed is pressed, the song 760 of the corresponding music data is displayed.

The time line 781 illustrated in FIG. 15 is a screen in which musical pieces that the favorite users have appreciated are listed. If an image of a user displayed in the time line 781 is pressed, the user interface screen transitions to the user profile 770. In addition, if an image related to music data displayed in the time line 781 is pressed, the user interface screen transitions to the song 760 indicating the corresponding music data.

The group profile 782 is a screen for displaying information related to groups. Here, the groups generally include a plurality of users and are configuration units formed for a predetermined purpose. As the predetermined purpose, intercommunication about artists, categories, musical pieces, and the like with preference, for example, are exemplified.

In the group profile 782, information about members (users) who join a group and information posted by the members, for example, comments and musical piece information are displayed. If an image of a member displayed in the group profile 782 is pressed, the user interface screen transitions to the user profile 770 of the corresponding user or the chat 783 with the corresponding user in accordance with the setting. If an image about posted musical piece information displayed in the group profile 782 is pressed, the user interface screen transitions to the song 760 that displays the corresponding musical piece information.

In addition, buttons for the user joining or resigning the group are appropriately arranged in the group profile 782.

The chat 783 is a screen for chatting between the users, that is, for transmitting and receiving messages. In the chat 783, messages transmitted by the respective users are displayed along with the images of the respective users.

The my profile 784 is a screen for display information related to the user who owns the user terminal 200. In the my profile 784, the information related to the user who owns the user terminal 200 is displayed in the format corresponding to the user profile 770. The user who owns the user terminal 200 can ascertain how the information of its own is to be opened to other users by referring to the my profile 784.

The examples of the user interface screens have been described above. However, the user interface screens that are used by the user terminal 200 are not limited to the aspects illustrated in the drawings, and screens can appropriately be added or omitted as needed. In addition, a configuration related to the respective buttons or information may be added or omitted as needed in the aforementioned respective screens. In addition, the user interface screen may be set such that transition between screens is performed in addition to the aforementioned description.

### <5. Operation example of information processing system>

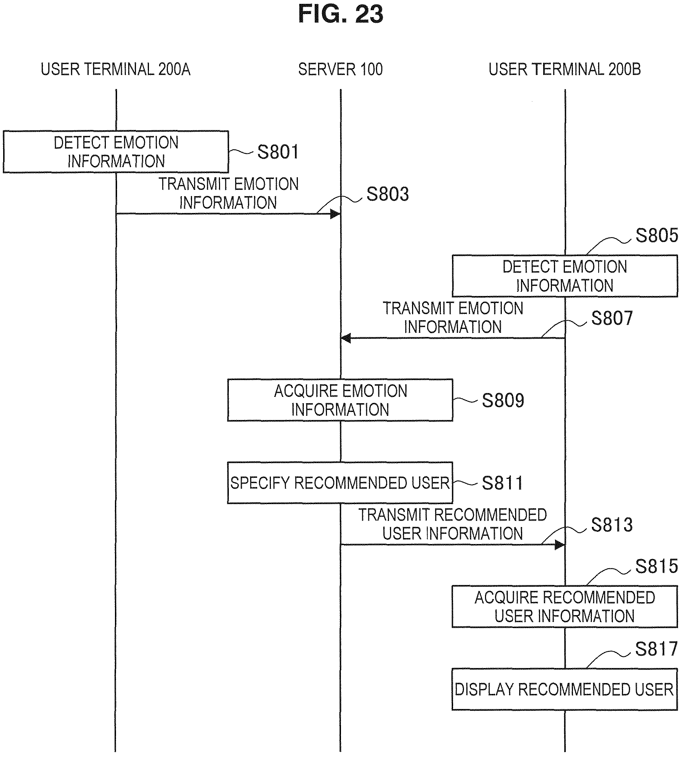

Next, a flow of operations of the aforementioned information processing system 1000 will be described. FIGS. 23 to 25 are sequence diagrams illustrating examples of operations of the information processing system 1000 according to the embodiment of the present disclosure. Note that user terminals 200A and 200B in the drawing are respectively terminals that are arbitrarily selected from the aforementioned user terminals 200, and therefore, the user terminals 200A and 200B have configurations similar to those of the user terminals 200. In addition, description will be given on the assumption that an owner of the user terminal 200A is a first user and an owner of the user terminal 200B is a second user. In addition, the flow of the operations of the information processing system 1000 will be described below by dividing the flow into display of a recommended user, display of preference information, and reproduction of notification information.

### (Display of recommended user)

As illustrated in FIG. 23, the user terminal 200A generates emotion information of the first user who owns the user terminal 200A for each music data item first (S801). Specifically, emotion points are input by the input unit 226 in tune with a musical piece of the music data reproduced and output by the musical piece reproduction unit 214, the output control unit 204, and the output unit 206. The emotion points are input by the first user tapping the emotion input button 714 in the player 710 on the aforementioned user interface screen. Then, the emotion information generation unit 216 generates emotion information by associating the respective input emotion points with a time axis of the music data.

Then, the user terminal 200A transmits the generated emotion information to the server 100 via the transmission unit 230 (S803).

Meanwhile, the user terminal 200B also generates emotion information of the second user (S805). Then, the user terminal 200B transmits the emotion information of the second user to the server 100 (S807). The server 100 acquires the emotion information of the respective users including the first user and the second user (S809).

Then, the recommended user decision unit 108 of the server 100 decides, as a recommended user, a user to be represented to the second user from among the users for which emotion information has been acquired (S811). A specific procedure for deciding the recommended user is as described above, and the decision is made on the basis of the relevance of the emotion information of the respective users in response to parts of the music data. Note that the following description will be given on the assumption that the recommended user is the first user. Note that there may be a plurality of recommended users.

Then, the server 100 transmits user information of the first user who is the recommended user to the user terminal 200B (S813), and the user terminal 200B acquires the user information of the first user (S815).

Then, the output control unit 204 of the user terminal 200B controls the display unit 208 such that the display unit 208 displays the user information of the first user, and the display unit 208 displays the user information (S817). In this manner, the second user can recognize, or in the embodiment, view the user information of the first user. Such display of the user information is performed by the user information of the first user being displayed in the aforementioned recommend 730 on the user interface screen, for example.

### (Display of preference information)

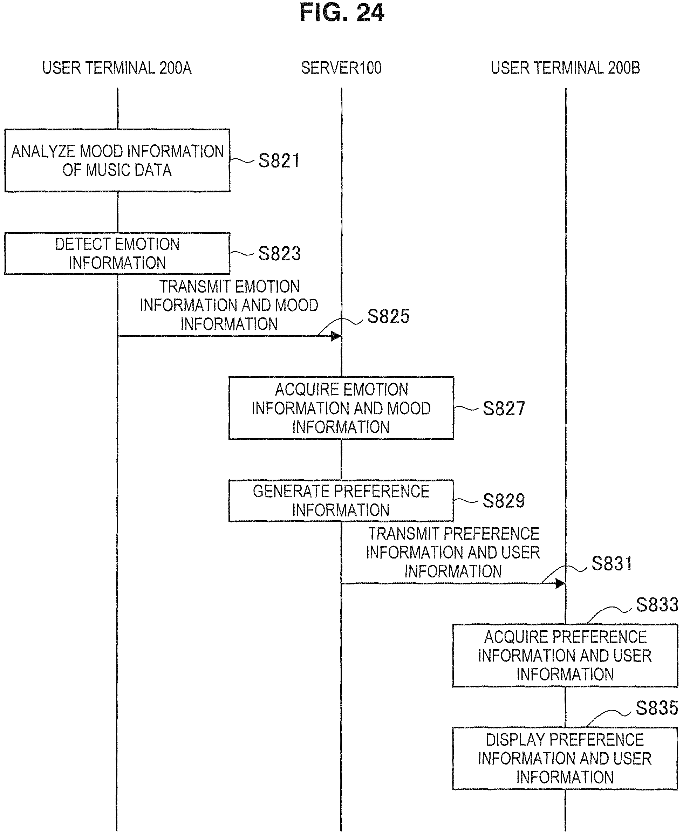

Next, a method of displaying preference information will be described. As illustrated in FIG. 24, the mood analysis unit 218 of the user terminal 200A first analyzes mood information of music data (S821). Then, the user terminal 200A generates emotion information of the first user who owns the user terminal 200A for each music data item (S823). The user terminal 200A transits the obtained mood information and the emotion information to the server 100 via the transmission unit 230 (S825). The server 100 acquires the mood information and the emotion information (S827).

Then, the preference information generation unit 110 of the server 100 generates preference information of the first user on the basis of the mood information and the emotion information (S829). The server 100 transmits user information stored in the user information database 104 along with the generated preference information to the user terminal 200B (S831).

The user terminal 200B receives the preference information and the user information of the first user (S833). Then, the output control unit 204 of the user terminal 200B controls the display unit 208 such that the display unit 208 displays the received preference information and the user information of the first user, and the display unit displays the preference information and the user information of the first user. Such display of the user information and the preference information can be performed by the aforementioned method as illustrated in FIG. 4, for example.

### (Reproduction of notification information)

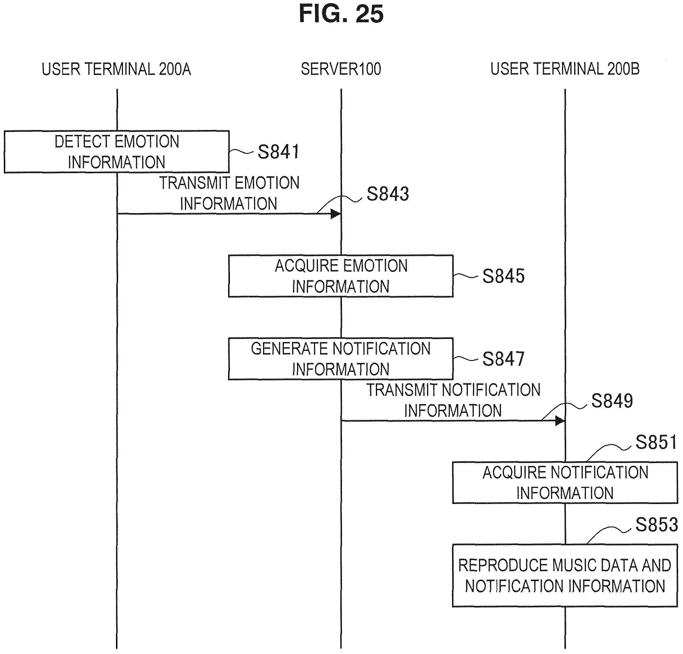

Next, a method of reproducing notification information will be described. As illustrated in FIG. 25, the user terminal 200A first generates emotion information of the first user who owns the user terminal 200A for certain music data (S841). Then, the user terminal 200A transmits the generated emotion information to the server 100 via the transmission unit 230 (S843). The server 100 acquires the emotion information of the first user (S845).

Then, the notification information generation unit 112 of the server 100 generates notification information on the basis of the emotion information related to the aforementioned music data and meta-information of the music data stored in the musical piece information database 106 (S847). The server 100 transmits the generated notification information to the user terminal 200B via the transmission unit 114 (S849). The user terminal 200B receives the notification information (S851).

Then, when the second user operates the user terminal 200B and the music data is reproduced by the user terminal 200B, the notification information is reproduced in tune with the progress of the musical piece of the music data (S853). The reproduction of the notification information is performed as illustrated in FIG. 3, for example. Specifically, the notification information is reproduced such that the sound effect 403C occurs at a part at which the emotion point 401C of the user C who is the first user occurs. In addition, the user information image 500 is displayed at a position at which the emotion point of each user has occurred along the progress bar 713 as illustrated in FIG. 18, for example. In addition, the emotion point 716 of its own is displayed as the notification information along the progress bar 713.

### <6. Modification examples>

The embodiment of the present disclosure has been described above. Hereinafter, some modification examples of the aforementioned embodiment of the present disclosure will be described. Note that the respective modification examples described below may be applied to the aforementioned embodiment alone or may be applied to the aforementioned embodiment of the present invention in combination. In addition, the respective modification examples may be applied instead of the configuration described in the aforementioned embodiment of the present disclosure or may be additionally applied to the configuration described in the aforementioned embodiment of the present disclosure.

### [First modification example]

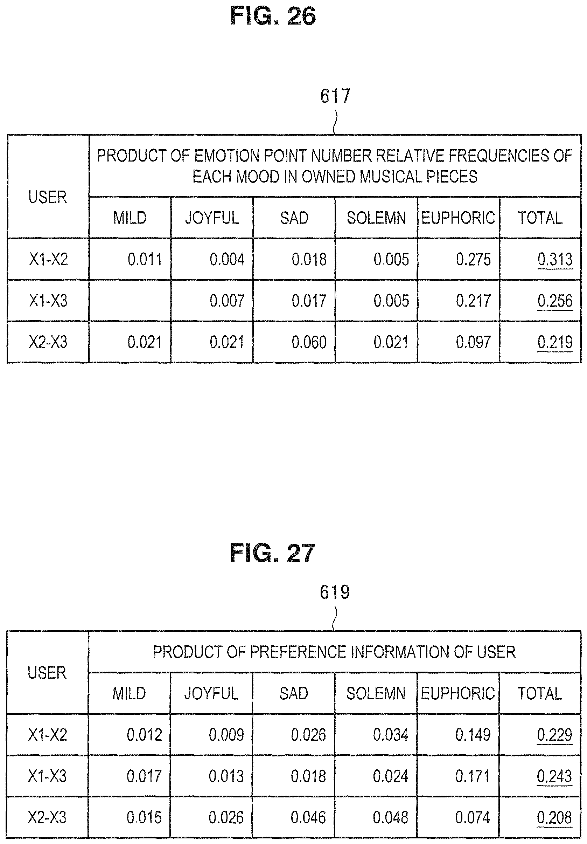

Although the recommended user decision unit 108 uses a product of emotion points for each part of musical pieces between users as an index of relevance of the sensibilities between the users in the aforementioned embodiment, the present disclosure is not limited thereto, and it is only necessary for emotion information of each user in response to a part of meta data to be used for evaluating the relevance of the sensibilities between the users. FIGS. 26 to 28 are other examples of information that is used by the recommended user decision unit 108 of the server illustrated in FIG. 5.

For example, the relevance of the sensibilities between the users may also be evaluated on the basis of the mood information of the music data that the user owns. For example, the emotion point of each mood of the musical pieces that the user owns as illustrated in FIG. 11 is generated on the basis of the mood information of the music data that the user owns and the emotion point of the user for each part of the music data. Then, as illustrated in FIG. 26, products of relative frequencies of integrated values of emotion points for each mood of the musical pieces that the user owns as illustrated in FIG. 12 can be calculated between the users, and the sum thereof can be used as an index of relevance of the sensibilities between the users.

In addition, the relevance of the sensibilities between the users may be evaluated on the basis of preference information of the users, for example. The preference information as illustrated in FIG. 13 has a value related to the preferences for each mood. As illustrated in FIG. 27, the sum obtained by multiplying, for each mood, such values related to the preferences for each mood are calculated between the users, and the sum thereof can be used as an index for the relevance of the sensibilities between the users. In a case in which such a sum (a degree of conformance) is equal to or greater than a specific value, or in a case in which such a sum is relatively greater within a specific range than the other users, the recommended user decision unit 108 can decide a user with such a degree of conformance as a recommended user.

Note that in the case in which the products are calculated for each mood as described above, the recommended user decision unit 108 can decide the recommended user even in a case in which emotion information has not been generated for the music data that the users share. That is, the recommended user may be decided on the basis of the emotion information of the respective users and is not necessarily decided on the basis of the emotion information of the music data that the users share in the present disclosure.

In addition, the recommended user may also be decided on the basis of the reproduction history of the music data of the user who receives recommendation of the recommended user, for example. For example, the emotion points in the emotion information of each music data items may be multiplied by a coefficient in accordance with the reproduction frequencies of the respective music data items in the reproduction history of the music data. In addition, the coefficient may simply increase as the reproduction frequency increases. In addition, the coefficient may be set in consideration of an elapse time after reproduction of the music data in addition thereto. For example, it is possible to reduce the coefficient as the elapse time increases after the reproduction of the music data even if the reproduction frequencies are the same. In such a case, the user terminal 200 has reproduction history database that stores a reproduction history of the user, and the reproduction history is appropriately transmitted to the server 100.

### [Second modification example]

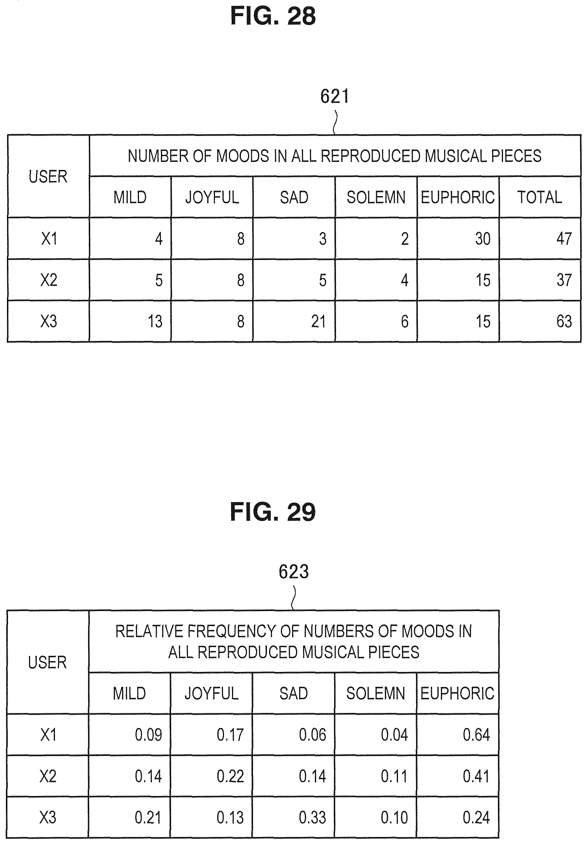

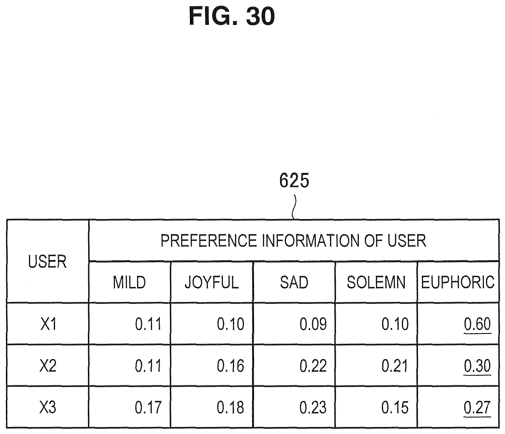

Although the preference information generation unit 110 generates preference information on the basis of emotion information of the user in response to moods of musical pieces and moods of the musical pieces that the user owns in the aforementioned embodiment, the present disclosure is not limited thereto, and the preference information may be generated on the basis of emotion information of the user in response to one or more moods included in the musical pieces and moods of the musical pieces. FIGS. 29 and 30 are other examples of data that is used by the preference information generation unit 110 of the server 100 illustrated in FIG. 5.

For example, the preference information generation unit 110 may generate preference information only on the basis of emotion information of the user in response to moods of musical pieces.

In addition, the preference information generation unit 110 may generate the preference information on the basis of a reproduction history of music that the user has reproduced in addition to the emotion information of the user in response to the moods of the musical pieces and the moods of the musical pieces that the user owns, for example. For example, the preference information generation unit 110 integrates the numbers of moods in all the reproduced musical pieces as illustrated in the table 621 in FIG. 28 and calculates relative frequencies of the numbers of moods in all the reproduced musical pieces as illustrated in the table 623 in FIG. 29, on the basis of the reproduction history of the musical pieces. Then, the preference information generation unit 110 averages, for each user and for each mood, the respective relative frequencies in the table 623 in FIG. 29, the table 613 in FIG. '12, and the table 609 in FIG. 10 and obtains preference information of the user as illustrated in FIG. 30.

Note that the preference information generation unit 110 may multiply moods in each musical piece by a predetermined coefficient in accordance with a reproduction frequency of the musical piece in a process of integrating the numbers of moods in all the reproduced musical pieces. That is, the preference information generation unit 110 may apply weights to the musical pieces in accordance with the reproduction frequencies of the musical pieces. As the coefficient, a coefficient similar to the one used when the aforementioned recommended user is decided can be used.

In addition, the preference information generation unit 110 may generate a plurality of preference information items based on different information items. In this case, at least one of the preference information items is generated on the basis of emotion information of the user in response to one or more moods included in the musical pieces and moods of the musical pieces.

### [Third modification example]

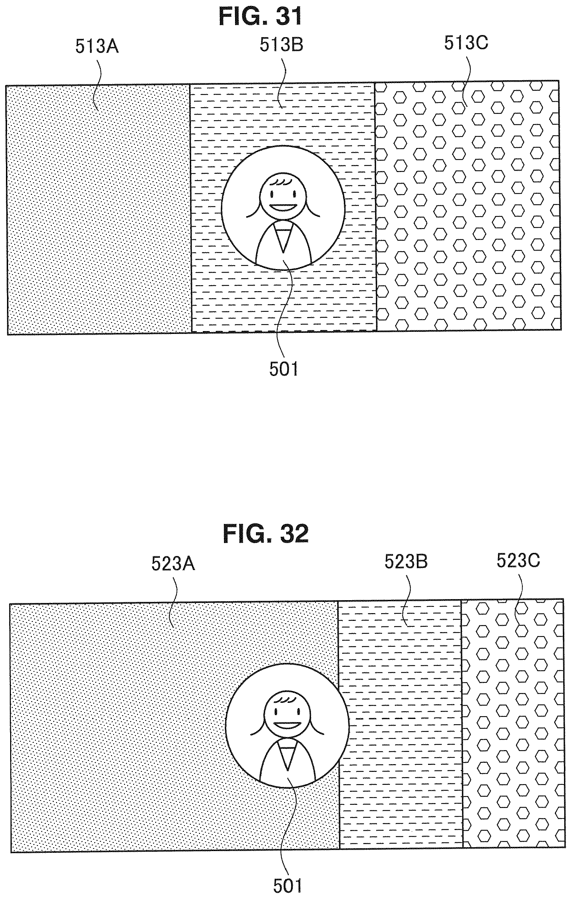

Although the aforementioned embodiment has been described on the assumption that the user image 501 with a circular outer shape is displayed in the user information image 500 and the mood image 503 for the user is displayed so as to surround the periphery thereof, the present disclosure is not limited thereto. FIGS. 31 to 35 illustrate display of mood images according to a modification example of the present disclosure.

For example, the user image may be a polygon, for example, a polygon that has three to twelve corners, and a square, in particular, and mood images with ring shapes, for example, may be displayed along the outer periphery thereof. In addition, the number of mood images displayed is not particularly limited, for example.

In addition, a plurality of color strips that represents moods may be aligned in mood images 513A to 513C and 523A to 523C as illustrated in FIGS. 31 and 32. In this case, the mood images 513A to 513C and 523A to 523C can be displayed as backgrounds of the user image 501 as illustrated in FIGS. 31 and 32, for example. Note that the mood image may be displayed as vertical stripes as illustrated in FIGS. 31 and 32, may be displayed as horizontal stripes, or may be displayed as stripes with a predetermined angle with respect to the horizontal line.

In addition, the output control unit 204 may control the display unit 208 such that the mood images 513A to 513C are evenly displayed regardless of how high the respective preferences of the user are, as illustrated in FIG. 31. In this case, the output control unit 204 may control the display unit 208 such that the mood image (first mood) 513B related to preference information with higher preference of the user is displayed at a location closer to the user image 501 than the mood images (second mood) 513A and 513C related to other preference information, for example.

In addition, the output control unit 204 may control the display unit 208 such that the mood image 523A related to preference information (second mood) with higher preference of the user is displayed to be larger than the mood images related to other preference information (the first mood and the third mood) as illustrated in FIG. 32. In this case, the output control unit 204 can decide a ratio of an area of the image related to the second mood with respect to an area of the image related to the first mood on the basis of a relationship between a value related to the first mood calculated by the preference information generation unit 110 and a value related to the second mood, for example. More specifically, the areas of the respective mood images 513A to 513C can be decided on the basis of the values related to the respective moods calculated by the preference information generation unit 110.

In addition, the output control unit 204 may control the display unit 208 such that in an image that has a reference point and displays preference information of the user, an image related to a first mood for which the user has higher preference than a second mood from among moods of the musical piece is displayed at a location closer to a reference portion than an image related to the second mood. Here, the reference portion is a dot, a line, or a site with a specific area on a screen of the display unit 208 set for displaying the mood images. Such a reference portion can be a display site of the user image 501, for example.

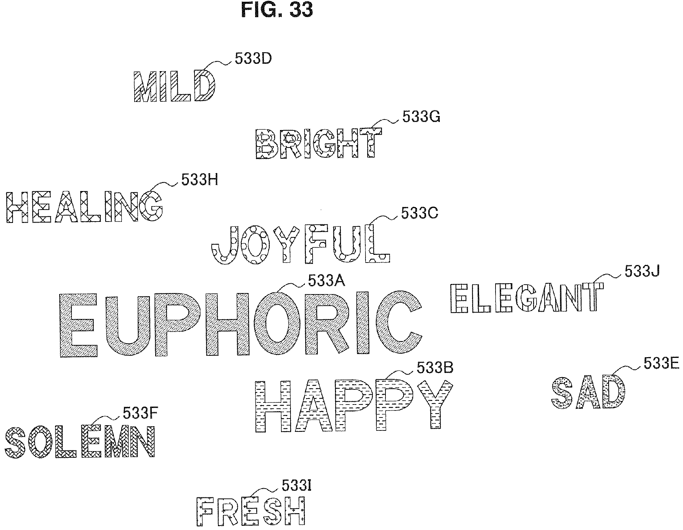

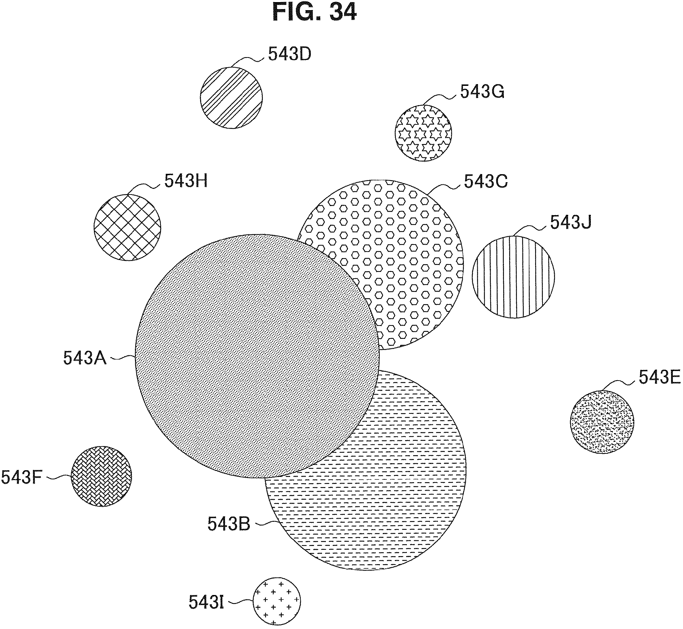

As illustrated in FIGS. 33 and 34, for example, the output control unit 204 may control the display unit 208 such that the respective mood images 533A to 5331 and 533A to 5331 of moods with higher preferences of the user are displayed at locations closer to the reference portion relative to the center of the image as a reference portion. Note that the output control unit 204 may also control the display unit 208 such that the mode image related to preference information with a higher preference of the user is displayed to be larger than the mood images related to other preference information in this case.

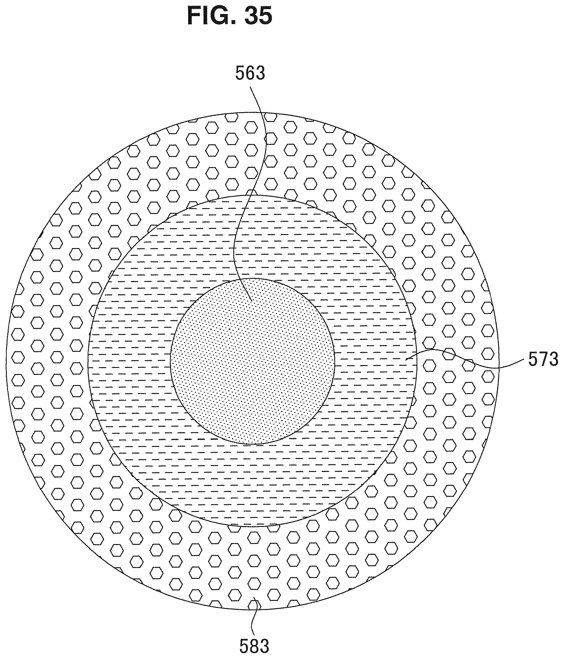

In addition, the output control unit 204 may control the display unit 208 such that mood images 563, 573, and 583 related to a plurality of preference information items based on different information are displayed as illustrated in FIG. 35 in a case in which the plurality of preference information items are displayed. In FIG. 35, for example, the mood images 563, 573, and 583 are displayed in an overlapping manner so as to form concentric circles. For example, the mood image 563 illustrated at the center in the drawing is on the basis of emotion information of the user in response to moods of musical pieces. In addition, the mood image 573 arranged along an outer periphery of the preference information 563 is on the basis of moods of the musical pieces that the user owns. Further, the mood image 583 arranged along the outer periphery of the mood image 573 is on the basis of a reproduction history of music that the user has reproduced. The preference information for these mood images 563, 573, and 583 is generated by the aforementioned preference information generation unit 110.

### [Fourth modification example]

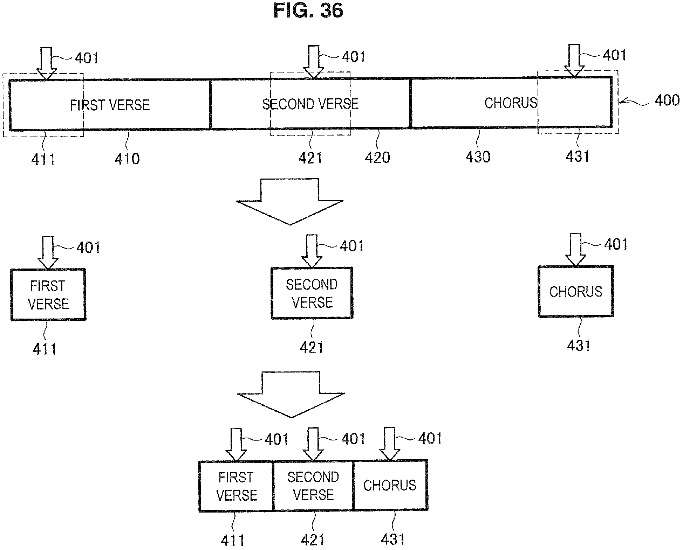

In addition, the user terminal 200 may have an edited music data generation unit that generates edited music data by editing music data on the basis of the music data. For example, the edited music data generation unit can edit the music data on the basis of emotion information of the user in response to the music data. FIG. 36 is an outline diagram illustrating editing of music data by the edited music data generation unit that is included in the user terminal according to a modification example of the present disclosure.

It is assumed that an emotion point 401 occurs in sub-sections 411, 421, and 431 in a part 410, a part 420, and a part 430 of the music data 400 during reproduction of the music data 400 as illustrated in FIG. 36. In such a case, the edited music data generation unit extracts and couples the sub-sections 411, 421, and 431, for which the emotion point 401 has occurred, and generates a new edited music data 400A. Since such edited music data 400A is obtained by extracting the parts, for which the emotion point 401 of the user has occurred, the user can listen to only favorite parts of the music data 400 by the edited music data 400A.

### [Fifth modification example]

Although the aforementioned embodiment has been described on the assumption that the emotion point is detected by the emotion input button 714 in the user terminal 200 being pressed, the present disclosure is not limited thereto. For example, the user terminal 200 may include a biological information detection unit capable of detecting changes in biological information of the user. As such a biological information detection unit, equipment that responds to the biological information as a target of the detection is appropriately selected. For example, the biological information detection unit is a heart rate meter, a blood pressure meter, a brain wave measurement machine, a pulse meter, a body temperature meter, an acceleration sensor, a gyro sensor, or a geomagnetic sensor.

The acceleration sensor, the gyro sensor, and the geomagnetic sensor from among these examples can be utilized for detecting body motion and a body pressure, for example, in accordance with the configurations thereof. In a case in which the biological information detection unit is an acceleration sensor, for example, it is possible to detect motion of the user in tune with reproduction of music data if the biological information detection unit can be attached to the head or the neck or near the body trunk of the user.

In such a case, the body motion can be detected by comparing a tempo of a musical piece that each part of the music data has with a cycle of an amplitude of the motion of the user. In a case in which a correlation between the tempo of the musical piece and the cycle of the amplitude is equal to or greater than a specific level, for example, the emotion point is detected.

### [Sixth modification example]

Although the aforementioned embodiment has been described on the assumption that the user terminal 200 includes the mood analysis unit 218, the present disclosure is not limited thereto, and the user terminal 200 may not have the mood analysis unit while other electronic equipment, for example, the server 100 may have the mood analysis unit. In such a case, it is not necessary to perform the mood analysis for the music data for each user terminal 200. In addition, it is possible to prevent overlapping mood analysis of the music data by intensively performing the mood analysis of the music data in the server 100.

Note that in the case in which the server 100 has the mood analysis unit, the server 100 may have the musical piece database that stores the music data, or the server 100 may acquire the music data for performing the mood analysis from an external musical piece database.

### [Seventh modification example]

Although the aforementioned embodiment has been described on the assumption that the server 100 includes the preference information generation unit 110, the present disclosure is not limited thereto, and the user terminal 200 may have the preference information generation unit. In such a case, preference information generated by the user terminal 200, for example, is appropriately transmitted to the user information database 104 of the server 100.

### <7. Example of hardware configuration of server>

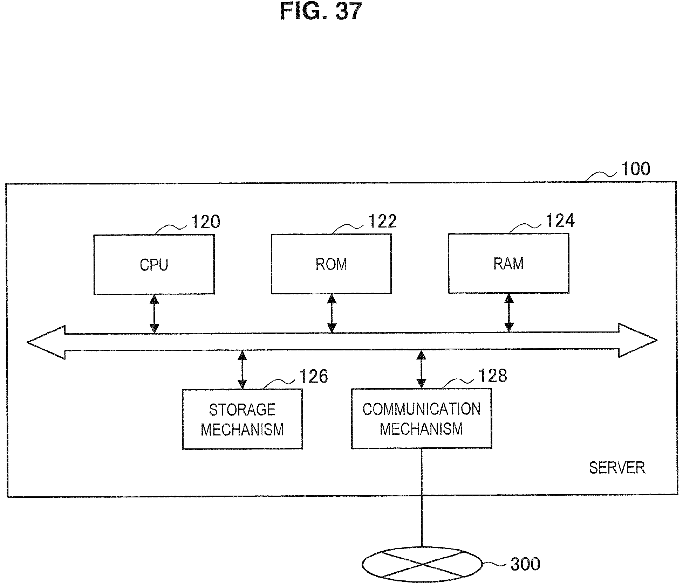

Next, a hardware configuration of the aforementioned server 100 will be described. FIG. 37 is a block diagram illustrating a hardware configuration of the server 100 illustrated in FIG. 1. The server 100 has a CPU 120, a ROM 122, a RAM 124, a storage mechanism 126, and a communication mechanism 128.

The CPU 120 is a processor that functions as a computation processing mechanism and a control mechanism and controls the entire operations in the server 100 or a part of the operations in the server 100 in accordance with various programs recorded in the ROM 122, the RAM 124, and the storage mechanism 126. The ROM 122 stores programs, computation parameters, and the like that the CPU 120 uses. The RAM 124 primarily stores programs that the CPU 120 uses and parameters and the like that appropriately change during execution of the programs. The CPU 120, the ROM 122, and the RAM 124 are connected to each other by a host bus that includes an internal bus such as a CPU bus.

The storage mechanism 126 is a mechanism for storing data, which is included as an example of the storage unit for storing data stored in the user information database 104 and the musical piece information database 106. The storage mechanism 126 includes, for example, a magnetic storage unit device such as a hard disk drive (HDD), a semiconductor storage device, an optical storage device, or a magneto-optical storage device. The storage mechanism 126 stores programs and various kinds of data that the CPU 120 executes and various kinds of externally acquired data.

The communication mechanism 128 is a communication interface that includes a communication device and the like for connection with the network 300, for example. The communication mechanism 128 is a communication card or the like for wired or wireless local area network (LAN), Bluetooth (registered trademark) or wireless USB (WUSB), for example. This communication mechanism 128 can transmit and receive signals or the like in accordance with a predetermined protocol such as TCP/IP, for example, to and from the Internet and other communication devices, for example.

The example of the hardware configuration capable of realizing functions of the server 100 according to the embodiment of the present disclosure has been described above. The aforementioned respective components may be included by using general-purposed members or may be hardware specialized for the functions of the respective components. In addition, the hardware configuration utilized can be appropriately changed in accordance with a technical level at that time when the embodiment is implemented.

The functions of the reception unit 102, the user information database 104, the musical piece information database 106, the recommended user decision unit 108, the preference information generation unit 110, the notification information generation unit 112, and the transmission unit 114, for example, are realized by cooperation between the hardware and the software of the server 100 as described above.

### <8. Hardware configuration of user terminal>

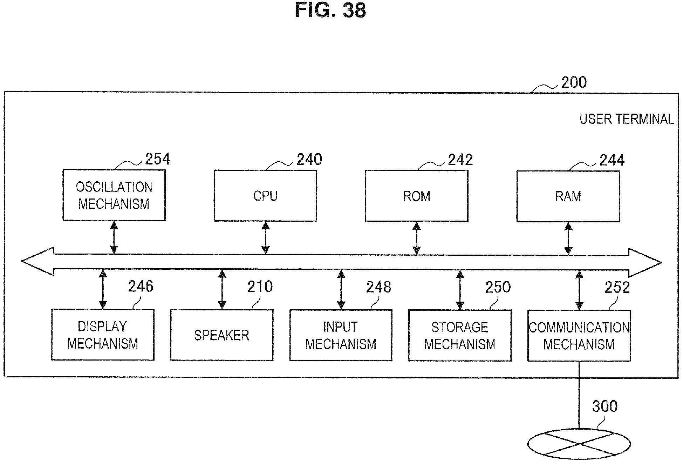

Next, an example of a hardware configuration of the user terminal 200 will be described. FIG. 38 is a block diagram illustrating a hardware configuration of the user terminal 200 illustrated in FIG. 1.

First, the user terminal 200 will be described. As illustrated in FIG. 38, the user terminal 200 includes a CPU 240, a ROM 242, a RAM 244, a display mechanism 246, a speaker 210, an input mechanism 248, a storage mechanism 250, a communication mechanism 252, and an oscillation mechanism 254. Since configurations of the CPU 240, the ROM 242, the RAM 244, and the storage mechanism 250 can be similar to the aforementioned configurations of the CPU 120, the ROM 122, the RAM 124, and the storage mechanism 126, description thereof will be omitted. Also, the speaker 210 is as described above.

The display mechanism 246 is a mechanism capable of providing a visual notification of acquired information to the user. The display mechanism 246 is included in the display unit 208. The display mechanism 246 can be, for example, a CRT display mechanism, a liquid crystal display mechanism, a plasma display mechanism, an EL display mechanism, a lamp, or the like. In addition, although the display mechanism 246 is incorporated in the user terminal 200 according to the aspect illustrated in the drawing, the display mechanism is not limited thereto and may be present outside the user terminal 200.

The input mechanism 248 is an operation means, such as a mouse, a keyboard, a touch panel, a button, a switch, and a lever, for example, that the user operates. In addition, the input mechanism 248 may be a remote control means (a so-called remote controller) that utilizes infrared rays or other electric waves, for example, or may be externally connected equipment such as a mobile phone or a PDA that responds to operations of the user terminal 200. Further, the input mechanism 248 includes an input control circuit or the like that generates an input signal on the basis of information input from the user by using the aforementioned operation means, for example, and outputting the input signal to the CPU 240. The user of the user terminal 200 can input various kinds of data or provide an instruction for a processing operation to the user terminal by operating the input mechanism 248.

The communication mechanism 252 has a communication device for connection to a wired and/or wireless wide area network (WAN) as needed in addition to the aforementioned configuration of the communication mechanism 128.

The oscillation mechanism 254 is a mechanism that is included in the oscillation generation unit 212 and is for generating oscillation. The oscillation mechanism 254 can generate oscillation through rotation or the like of a motor that has an eccentric mass, for example.

The functions of the reception unit 202, the output control unit 204, the output unit 206, the musical piece reproduction unit 214, the emotion information generation unit 216, the mood analysis unit 218, the storage unit 220, the input unit 226, the position information detection unit 228, and the transmission unit 230, for example, are realized by cooperation between hardware and software of the aforementioned user terminal 200.

### <9. Computer program>

It is also possible to produce a computer program for causing hardware of each mechanism in the aforementioned information processing system 1000 and or the hardware such as the CPU 120, the ROM 122, the RAM 124, and the storage mechanism 126 incorporated in the server 100, for example, to exhibit the functions of the aforementioned each mechanism. In particular, the functions of the reception unit 102, the user information database 104, the musical piece information database 106, the recommended user decision unit 108, the preference information generation unit 110, the notification information generation unit 112, the transmission unit 114, and the like may be implemented on the server 100 by the server 100 downloading and installing the computer program. In addition, a storage medium with the computer program stored therein is also provided.

In addition, it is also possible to produce a computer program for causing the hardware such as the CPU 220, the ROM 222, the RAM 224, and the storage mechanism 250 incorporated in the user terminal 200, for example, to exhibit functions of the aforementioned each mechanism. In particular, the functions of the reception unit 202, the output control unit 204, the output unit 206, the musical piece reproduction unit 214, the emotion information generation unit 216, the mood analysis unit 218, the storage unit 220, the input unit 226, the position information detection unit 228, the transmission unit 230, and the like may be implemented on the user terminal 200 by the user terminal 200 downloading and installing the computer program. In addition, a storage medium with the computer program stored therein is also provided.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a preference information output unit that outputs preference information, which has been generated on a basis of emotion information of a user in response to moods included in a musical piece, of the user to a display unit that displays the preference information.
(2) The information processing apparatus according to (1), in which the preference information output unit controls the display unit to display an image related to the moods around an image that represents the user on a basis of the preference information.
(3) The information processing apparatus according to (2), in which the preference information output unit controls the display unit such that an image that represents the plurality of different moods is displayed around an image that represents the user on a basis of the preference information.
(4) The information processing apparatus according to (2), in which the image related to the moods is an image with a ring-shape arranged along an edge portion of the image that represents the user.
(5) The information processing apparatus according to (4), in which the image related to the moods is an image with a circular-ring-shape arranged along an edge portion of the image that represents the user.
(6) The information processing apparatus according to (4) or (5),
   in which the image related to the moods includes a plurality of different colors, and
   each of the plurality of different colors represents a different mood.
(7) The information processing apparatus according to (2), in which the image related to the moods includes a plurality of aligned color strips that represent the moods.
(8) The information processing apparatus according to any one of (1) to (7),
   in which the preference information output unit controls the display unit such that an image related to a first mood for which the user has a higher preference than a second mood from among a plurality of moods included in the musical piece is displayed to be larger than an image related to the second mood.
(9) The information processing apparatus according to (8),
   in which the preference information is generated on a basis of a value, which represents a relationship between each mood included in the musical piece and the emotion information related to the mood, for each mood, and
   the preference information output unit decides a ratio of an area of the image related to the second mood with respect to an area of the image related to the first mood on a basis of a relationship between the value for the first mood and the value for the second mood.
(10) The information processing apparatus according to any one of (1) to (9), in which the preference information output unit controls the display unit such that an image related to a first mood for which the user has a higher preference than a second mood from among a plurality of moods included in the musical piece is displayed at a location closer to the image that represents the user than the image related to the second mood.
(11) The information processing apparatus according to any one of (1) to (10), in which the preference information output unit controls the display unit such that in an image that has a reference portion and displays the preference information of the user, an image related to a first mood for which the user has higher preference than a second mood from among a plurality of moods included in the musical piece is displayed at a location closer to the reference portion than the image related to the second mood.
(12) The information processing apparatus according to any one of (1) to (14), in which the preference information is obtained on a basis of emotion information of the user in response to a first mood included in a first musical piece and emotion information of the user in response to a second mood that is different from the first mood and is included in a second musical piece,
(13) The information processing apparatus according to (12), in which the first musical piece and the second musical piece are the same musical piece.
(14) The information processing apparatus according to (12), in which the first musical piece and the second musical piece are different musical pieces.
(15) The information processing apparatus according to any one of (1) to (14), in which the preference information is generated on a basis of a value, which represents a relationship between each mood included in the musical piece and the emotion information related to the mood, for each mood.
(16) The information processing apparatus according to any one of (1) to (15), in which the preference information is decided on a basis of a reproduction history of reproduction performed by the user.
(17) The information processing apparatus according to any one of (1) to (16), in which the emotion information is information that is generated on a basis of at least one of a change in biological information of the user in response to music data of the musical piece and body motion of the user in response to the music data.
(18) The information processing apparatus according to any one of (1) to (17), in which the emotion information includes body motion information that is calculated on a basis of a frequency of body motion of the user in response to each part of music data of the musical piece.
(19) The information processing apparatus according to (18), in which the body motion information is calculated by integrating a frequency of body motion of the user in response to each part of the music data for the each part.
(20) The information processing apparatus according to (18), in which the body motion is detected by comparing a tempo of a musical piece that the music data has with a cycle of amplitude in motion of the user.
(21) The information processing apparatus according to (18), in which the body motion is detected by an input from the user.
(22) An information processing method including:
   outputting preference information, which has been generated on a basis of emotion information of a user in response to moods included in a musical piece, of the user to a display unit that displays the preference information.
(23) A program that causes a computer to function as:
   a preference information output unit that outputs preference information, which has been generated on a basis of emotion information of a user in response to moods included in a musical piece, of the user to a display unit that displays the preference information.

### Reference Signs List

- 100: server
- 102: reception unit
- 104: user information database
- 106: musical piece information database
- 108: recommended user decision unit
- 110: preference information generation unit
- 112: notification information generation unit
- 114: transmission unit
- 200, 200A, 200B: user terminal
- 202: reception unit
- 204: output control unit
- 206: output unit
- 208: display unit
- 210: speaker
- 212: oscillation generation unit
- 214: musical piece reproduction unit
- 216: emotion information generation unit
- 218: mood analysis unit
- 220: storage unit
- 222: user information storage unit
- 224: musical piece database
- 226: input unit
- 228: position information detection unit
- 230: transmission unit
- 300: network
- 1000: information processing system

## Claims

1. An information processing apparatus comprising:
a preference information output unit that outputs preference information, which has been generated on a basis of emotion information of a user in response to moods included in a musical piece, of the user to a display unit that displays the preference information.

2. The information processing apparatus according to claim 1, wherein the preference information output unit controls the display unit to display an image related to the moods around an image that represents the user on a basis of the preference information.

3. The information processing apparatus according to claim 2, wherein the image related to the moods is an image with a ring-shape arranged along an edge portion of the image that represents the user.

4. The information processing apparatus according to claim 3,
wherein the image related to the moods includes a plurality of different colors, and
each of the plurality of different colors represents a different mood.

5. The information processing apparatus according to claim 2, wherein the image related to the moods includes a plurality of aligned color strips that represent the moods.

6. The information processing apparatus according to claim 1,
wherein the preference information output unit controls the display unit such that an image related to a first mood for which the user has a higher preference than a second mood from among a plurality of moods included in the musical piece is displayed to be larger than an image related to the second mood.

7. The information processing apparatus according to claim 6,
wherein the preference information is generated on a basis of a value, which represents a relationship between each mood included in the musical piece and the emotion information related to the mood, for each mood, and
the preference information output unit decides a ratio of an area of the image related to the second mood with respect to an area of the image related to the first mood on a basis of a relationship between the value for the first mood and the value for the second mood.

8. The information processing apparatus according to claim 1, wherein the preference information output unit controls the display unit such that an image related to a first mood for which the user has a higher preference than a second mood from among a plurality of moods included in the musical piece is displayed at a location closer to the image that represents the user than the image related to the second mood.

9. The information processing apparatus according to claim 1, wherein the preference information output unit controls the display unit such that in an image that has a reference portion and displays the preference information of the user, an image related to a first mood for which the user has higher preference than a second mood from among a plurality of moods included in the musical piece is displayed at a location closer to the reference portion than the image related to the second mood.

10. The information processing apparatus according to claim 1, wherein the preference information is obtained on a basis of emotion information of the user in response to a first mood included in a first musical piece and emotion information of the user in response to a second mood that is different from the first mood and is included in a second musical piece,

11. The information processing apparatus according to claim 10, wherein the first musical piece and the second musical piece are the same musical piece.

12. The information processing apparatus according to claim 10, wherein the first musical piece and the second musical piece are different musical pieces.

13. The information processing apparatus according to claim 1, wherein the preference information is generated on a basis of a value, which represents a relationship between each mood included in the musical piece and the emotion information related to the mood, for each mood.

14. The information processing apparatus according to claim 1, wherein the preference information is decided on a basis of a reproduction history of reproduction performed by the user.

15. The information processing apparatus according to claim 1, wherein the emotion information is information that is generated on a basis of at least one of a change in biological information of the user in response to music data of the musical piece and body motion of the user in response to the music data.

16. The information processing apparatus according to claim 1, wherein the emotion information includes body motion information that is calculated on a basis of a frequency of body motion of the user in response to each part of music data of the musical piece.

17. The information processing apparatus according to claim 16, wherein the body motion is detected by comparing a tempo of a musical piece that the music data has with a cycle of amplitude in motion of the user.

18. The information processing apparatus according to claim 16, wherein the body motion is detected by an input from the user.

19. An information processing method comprising:
outputting preference information, which has been generated on a basis of emotion information of a user in response to moods included in a musical piece, of the user to a display unit that displays the preference information.

20. A program that causes a computer to function as:
a preference information output unit that outputs preference information, which has been generated on a basis of emotion information of a user in response to moods included in a musical piece, of the user to a display unit that displays the preference information.
